# EUROPÄISCHE PATENTANMELDUNG

(11) **EP 1 591 685 A2**
(43) Veröffentlichungstag der Anmeldung: **02.11.2005**
(21) Anmeldenummer: 05007010.1
(22) Anmeldetag: 31.03.2005
(51) Int. Cl.: F16D 3/205

(54) **Tripodegelenk**

(30) Priorität: 30.04.2004 DE 102004021418
(71) Anmelder: Bayerische Motoren Werke Aktiengesellschaft, 80809 München (DE)
(72) Erfinder: Rastinger, Bernhard, 81249 München (DE); Streinz, Wolfgang, 84034 Landshut (DE); Letzer, Michael, 83512 Wasserburg (DE)

(57) **Zusammenfassung**

Gelenkwellenanordnung mit einem Gelenkwellengelenk (1), insbesondere einen Tripodegelenk, das zur Übertragung eines Drehmoments um eine Längsachse (11) vorgesehen ist. Das Gelenkwellengelenk (1) weist eine Gelenkglocke (2) auf, an deren Innenseite mehrere Formschlusselemente (5-7) vorgesehen sind, die in einer Umfangsrichtung der Gelenkglocke (2) voneinander beabstandet sind, und einen in die Gelenkglocke (2) eingesetzten Gelenkstern (3), der wiederum mehrere von einem Zentralstück (10) nach außen abstehende Arme (14-16) aufweist. Jeder der Arme (14-16) greift jeweils zwischen zwei Formschlusselemente der Gelenkglocke (2) ein. Zwischen jedem der Arme (14-16) und den jeweils zugeordneten Formschlusselementen (5-7) sind in Drehmomentübertragungsrichtung elastische Zwischenelemente (20-25,87,88,92) angeordnet.

## Beschreibung

Die vorliegende Erfindung betrifft eine Gelenkwellenanordnung mit einem Gelenkwellengelenk gemäß dem Oberbegriff des Patentanspruches 1.

Aus der DE 36 33 158 C2 ist ein Tripodegelenk mit einer aus einem elastischen Material bestehenden Gelenkglocke bekannt, in die ein Gelenkstern eingesetzt ist, der drei Gelenkarme aufweist, die in Umfangsrichtung jeweils um 120° voneinander beabstandet sind. Durch die Innenkontur der Gelenkglocke sind "Formschlusselemente" gebildet, in welche die Arme des Gelenksterns eingreifen, wodurch eine Drehmomentübertragung ermöglicht wird.

Aus der DE 198 19 615 C2 ist ein Gleichlaufverschiebegelenk mit einer Gelenkglocke und einem in die Gelenkglocke eingesetzten, dreiarmigen Gelenkstern bekannt. Ein ähnliches Gleichlaufgelenk ist aus der DE 31 34 270 A1 bekannt.

Aufgabe der Erfindung ist es, eine Gelenkwellenanordnung mit einem Gelenkwellengelenk zu schaffen, das hinsichtlich seiner Herstell- und Einbaukosten, Gewicht und Funktionseigenschaften optimiert ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einer Gelenkwellenanordnung mit einem Gelenkwellengelenk aus. Das Gelenkwellengelenk kann Drehmoment um eine Längsachse des Gelenks übertragen. Es weist eine Gelenkglocke auf, an deren Innenseite mehrere Formschlusselemente vorgesehen sind, die in einer Umfangsrichtung der Gelenkglocke voneinander beabstandet sind. In die Gelenkglocke ist ein Gelenkstern eingesetzt. Der Gelenkstern weist ein Zentralstück und mehrere von dem Zentralstück nach außen abstehende Arme auf. Die Arme können radial oder schräg nach außen von dem Gelenkstück abstehen. Jeder der Arme greift zwischen zwei Formschlusselemente der Gelenkglocke ein. Somit kann ein Drehmoment von dem Zentralstück über die Arme und die Formschlusselemente auf die Gelenkglocke übertragen werden und umgekehrt, von der Gelenkglocke auf den Gelenkstern. Es können drei solche Arme vorgesehen sein. In diesem Fall bezeichnet man das Gelenkwellengelenk als "Tripodegelenk". Es kann aber auch eine andere Anzahl von Armen vorgesehen sein, z. B. zwei, vier, fünf, sechs oder mehr Arme.

Gemäß der Erfindung ist nun vorgesehen, dass zwischen jedem der Arme des Gelenksterns und den jeweils zugeordneten Formschlusselementen, das heißt zwischen jedem Arm und den Formschlusselementen in die er eingreift, in Drehmomentübertragungsrichtung "elastische Zwischenelemente" angeordnet sind. Durch die elastischen Zwischenelemente werden Drehmomentstöße zwischen der Gelenkglocke und dem Gelenkstern gedämpft. Auch kann durch eine geeignete geometrische Gestaltung der Zwischenelemente und durch eine geeignete Materialwahl die Weiterleitung von Körperschall reduziert werden. Durch eine Teilvulkanisierung anstatt einer Vollvulkanisierung der Zwischenelemente kann die Weiterleitung von Körperschall zusätzlich verringert werden. Alternativ dazu ist es auch denkbar, dass die Zwischenelemente glatte Oberflächen aufweisen, die an der metallenen Gelenkglocke bzw. an dem metallenen Gelenkstern nur anliegen und nicht anvulkanisiert sind, was die Weiterleitung von Körperschall weiter verringert. Ferner können die Oberflächen der Zwischenelemente, die an der Gelenkglocke bzw. am Gelenkstern anliegen, strukturiert bzw., "rau" sein. Auch hierdurch kann die Weiterleitung von Körperschall verringert werden.

Ein weiterer Vorteil der elastischen Zwischenelemente besteht darin, dass aufgrund ihrer Verformbarkeit ein gewisser Schwenk- bzw. Knickfreiheitsgrad des Gelenksterns in bezug auf die Gelenkglocke ermöglicht wird.

Hinsichtlich der konkreten Ausgestaltung der Gelenkwellenanordnung, insbesondere hinsichtlich der Ausgestaltung des Gelenkwellengelenks gibt es verschiedene Möglichkeiten, die im Zusammenhang mit der Zeichnung näher erläutert werden: Es wird ausdrücklich darauf hingewiesen, dass sämtliche Kombinationen von Merkmalen, die in den nachfolgenden Ausführungsbeispielen enthalten sind, die aber nicht explizit anhand einer separaten Zeichnung erläutert sind, Gegenstand der Anmeldung und Grundlage für Patentansprüche sein können.

Im folgenden wir die Erfindung anhand von Ausführungsbeispielen im Zusammenhang mit der Zeichnung näher erläutert. Es zeigen:
- Figur 1: ein Gelenkwellengelenk gemäß der Erfindung in zusammengebautem Zustand;
- Figur 2: einen Teilschnitt durch das Gelenkwellengelenk der Figur 1;
- Figur 3: die einzelnen Komponenten des Gelenkwellengelenks der Figuren 1, 2;
- Figur 4: eine Explosionsdarstellung des Gelenkwellengelenks der Figur 1 zur Verdeutlichung der Zusammenbaureihenfolge;
- Figuren 5, 6: verschiedene Ansichten eines Ausführungsbeispiels einer Gelenkglocke gemäß der Erfindung;
- Figur 7: die über Halteelemente miteinander verbundenen elastischen Zwischenelemente;
- Figur 8: eine Darstellung, zur Erläuterung der Kopplung des Gelenksterns mit einem Wellenzapfen;
- Figur 9: eine Gelenkwelle mit einem ersten Gelenkwellengelenk zur Kopplung mit einem Getriebe und einem zweiten Gelenkwellengelenk zur Kopplung mit einem Achsgetriebe;
- Figur 10: ein weiteres Ausführungsbeispiel eines Gelenkwellengelenks gemäß der Erfindung;
- Figur 11: einen Teilschnitt durch das Gelenkwellengelenk der Figur 10;
- Figur 12,13: Ausführungsbeispiele der elastischen Zwischenelemente;
- Figur 14: eine mögliche Fixierung des Halteelements der Zwischenelemente in der Gelenkglocke;
- Figur 15: ein Ausführungsbeispiel, bei dem die Gelenkglocke über eine Kugelführung in einem mit dem Gelenkstern gekoppelten Wellenzapfen geführt ist;
- Figur 16: eine Kugellageranordnung, über die die Gelenkwelle zum Beispiel an einem Fahrzeugunterboden gelagert sein kann;
- Figur 17, 18: ein weiteres Ausführungsbeispiel eines Gelenkwellengelenks gemäß der Erfindung;
- Figur 19: ein weiteres Ausführungsbeispiel eines Gelenkwellengelenks gemäß der Erfindung;
- Figur 20: eine Darstellung zur Erläuterung der Funktion der Dämpfungs- bzw. Klemmringe;
- Figur 21: das Gelenkwellengelenk der Figuren 19, 20 in Stirnansicht;
- Figur 22, 23: verschiedene Ansichten einer geschmiedeten Gelenkglocke;
- Figuren 24 - 29: verschiedene Ausführungsbeispiele von Gelenkglocken;
- Figur 30: eine Explosionsdarstellung eines weiteren Ausführungsbeispiels gemäß der Erfindung;
- Figuren 31a, 31b: ein Ausführungsbeispiel eines Zentrierelementes und eines Halteelements;
- Figuren 32a, 32b: eine Darstellung zur Erläuterung der "Kugelgelenkfunktion";
- Figuren 33-37: zeigen ein weiteres Ausführungsbeispiel mit in die elastischen Zwischenelemente integrierten Anschlägen;
- Figur 38: ein Ausführungsbeispiel, bei dem an der Innenseite der Gelenkglocke Anschlagelemente vorgesehen sind;
- Figuren 39 - 41: verschiedene Berührformen der Anschlagelemente;
- Figuren 42-44: elastische Zwischenelemente mit Anschlägen;
- Figuren 45-51: Ausführungsbeispiele elastischer Zwischenelemente;
- Figuren 52 -55: verschiedene Halterungen für elastische Zwischenelemente;
- Figuren 56 - 58: elastische Zwischenelemente im Querschnitt;
- Figuren 59-67: Darstellungen zur Erläuterung der Verformung balliger elastischer Zwischenelemente,
- Figuren 68-73: weitere Ausführungsbeispiele elastischer Zwischenelemente.

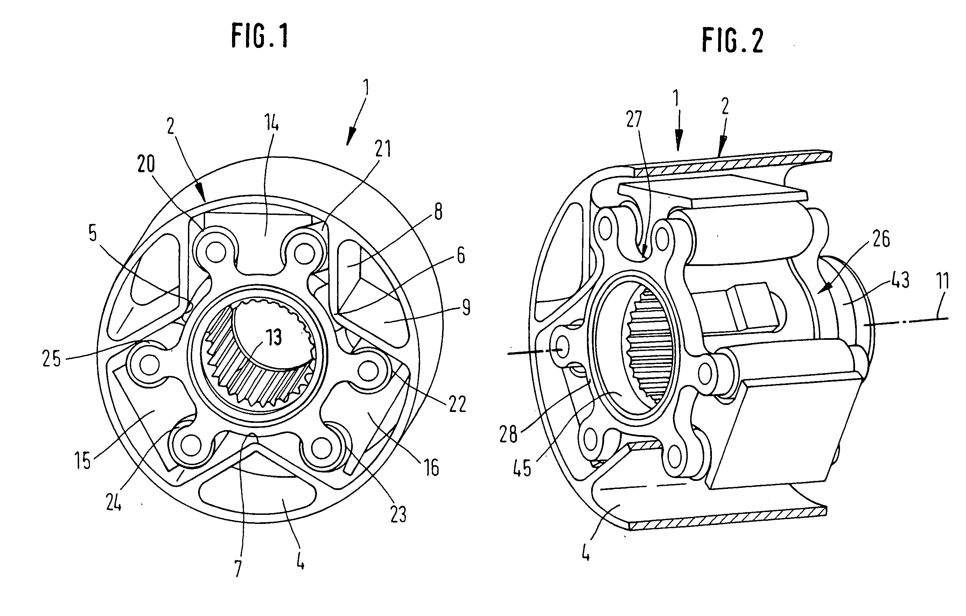

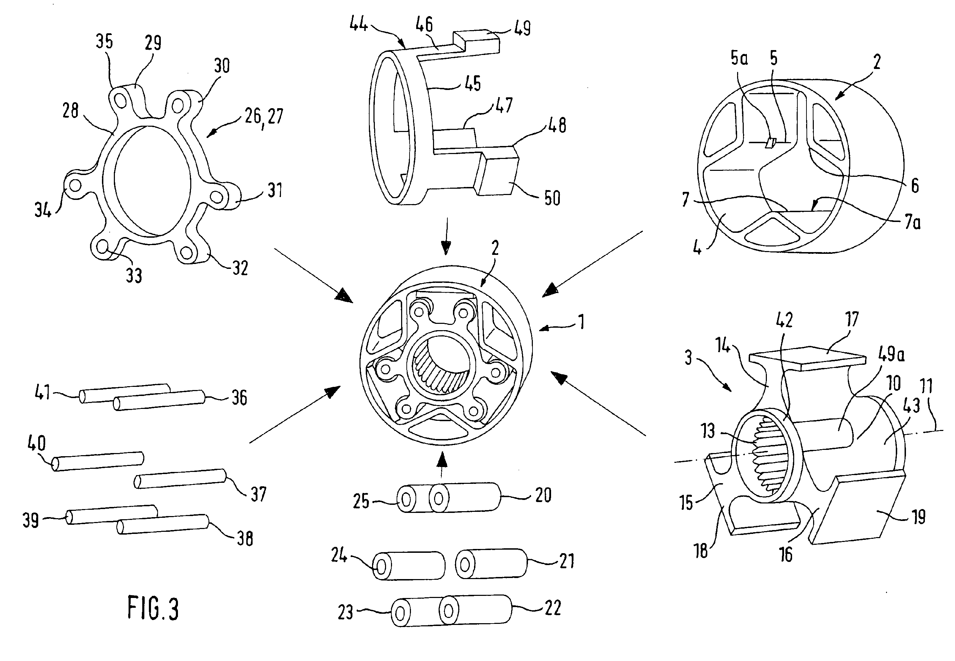

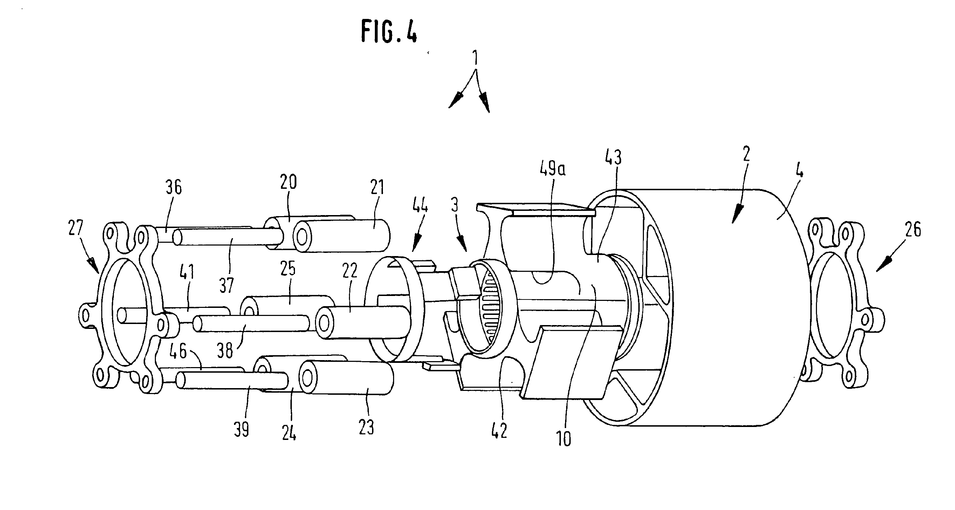

Die Figuren 1 - 4 zeigen ein erstes Ausführungsbeispiel eines Gelenkwellengelenks 1. Das Gelenkwellengelenk 1 weist eine Gelenkglocke 2 und einen Gelenkstern 3 auf (vgl. Figuren 3, 4), der in die Gelenkglocke 2 eingesetzt ist. Die Gelenkglocke 2 ist bei dem hier gezeigten Ausführungsbeispiel durch einen Rohrabschnitt 4 gebildet, an dessen Innenseite Formschlusselemente 5-7 (vgl. Figur 1, 3) vorgesehen sind. Die Formschlusselemente 5 - 7 sind hier jeweils durch zwei pfeilartig zur Mitte der Gelenkglocke 2 hin zusammenlaufende plattenartige Elemente 8, 9 (Figur 1) gebildet. Die plattenartigen Elemente 8, 9 sind im Bereich der "Spitze", das heißt dort, wo sie zusammenlaufen, abgerundet. Die plattenartigen Elemente 8, 9 können beispielsweise in das Rohr 4 der Gelenkglocke eingeschweißt sein. Alternativ dazu kann die Gelenkglocke 2 auch "einstückig" als Strangpressprofil hergestellt sein. Die Zwischenräume zwischen den plattenartigen Elementen 8, 9 und dem Rohr 4 der Gelenkglocke 2 können offen sein oder mit einem Material, zum Beispiel einem Elastomer ausgefüllt sein, wodurch gezielt die Steifigkeit der Gelenkglocke beeinflusst werden kann.

Die Gelenkglocke 2 und der Gelenkstern 3 und die übrigen Bauteile des Gelenkwellengelenks sind bei dem hier gezeigten Ausführungsbeispiel "symmetrisch" bezüglich der beiden möglichen Drehrichtungen aufgebaut. Dies muss nicht zwingend so sein. Es ist auch möglich, die einzelnen Bauteile des Gelenkwellengelenks hinsichtlich einer der beiden Drehrichtungen "steifer" bzw. "fester" auszulegen als für die andere Drehrichtung.

Wie am besten aus den Figuren 3 und 4 ersichtlich ist, weist der Gelenkstern 3 ein rohrartiges Zentralstück 10 auf. An der Innenseite des Zentralstücks 10 ist eine in Längsrichtung 11 des Gelenkwellengelenks 1 verlaufende Kerbverzahnung 13 vorgesehen, in die ein mit einer entsprechenden Außenverzahnung versehener Wellenzapfen eingeschoben werden kann. Dadurch wird zum einen eine Drehmomentübertragung ermöglicht. Zum anderen wird dadurch ein Verschiebefreiheitsgrad in Längsrichtung des Gelenkwellengelenks erreicht.

Vom Zentralstück 10 des Gelenksterns 3 stehen radial nach außen drei Arme 14 -16 ab, die in einer Umfangsrichtung des Gelenkwellengelenks, das heißt in Drehmomentübertragungsrichtung, einen Winkelabstand von 120° haben. An ihren radialen Enden weisen die Arme 14 - 16 plattenartige Elemente 17 - 19 auf. Im Bereich zwischen dem Zentralstück 10 und den plattenartigen Elementen 17-19 sind die Arme 14 - 16 konkav gekrümmt, entsprechend der Außenkontur tonnenartiger elastischer Zwischenelemente 20 - 25 (Figur 1,3).

Die elastischen Zwischenelemente 20 - 25 können beispielsweise aus einem Elastomer oder aus Gummi hergestellt sein. Das Material, aus dem die elastischen Zwischenelemente 20 - 25 hergestellt sind, sowie ihre konstruktive Gestaltung, beeinflussen entscheidend das Torsionsverhalten, das heißt die Torsionselastizität und die Dämpfungseigenschaften des Gelenkwellengelenks 1 in Torsionsrichtung sowie die Biege- bzw. Knicksteifigkeit des Torsionsgelenks 1. Bei dem in den Figuren 1 - 4 gezeigten Ausführungsbeispiel haben die elastischen Zwischenelemente 20 - 25 jeweils die Form eines hohlen Kreiszylinders. Ihr Außendurchmesser ist also über ihre gesamte Länge im wesentlichen konstant. Alternativ dazu könnten die elastischen Zwischenelemente 20 - 25 auch "ballig" bzw. ellipsoidförmig ausgeführt sein, was später noch näher erläutert wird.

Wie am besten aus den Figuren 2 und 4 ersichtlich ist, ist im Bereich der Stirnseiten der elastischen Zwischenelemente 20 - 25 jeweils ein Halteelement 26, 27 (vgl. auch Figur 3) vorgesehen. Die Halteelemente 26, 27 weisen jeweils einen Ring 28 auf, von dem radial nach außen Haltearme 29 - 34 abstehen. Die Haltearme 29 - 34 weisen jeweils eine Bohrung 35 (Figur 3) auf. Wie am besten aus den Figuren 2 und 4 ersichtlich ist, sind die Haltearme 29 - 34 der Halteelemente 26, 27 jeweils über Lagerstifte 36 - 41 miteinander verbunden. Auf die Lagerstifte 36-41 sind die elastischen Zwischenelemente 20 - 25 aufgeschoben. Die Halteelemente 26, 27 und die Stifte 36 - 41 bilden also einen "Käfig" für die elastischen Zwischenelemente 20 - 25. Der Ring 28 der Halteelemente 26, 27 ist dabei auf zugeordnete Abschnitte 42 bzw. 43 (vgl. Figuren 3, 4) des Außenumfangs des Zentralstücks 10 des Gelenksterns 3 aufgeschoben.

Das Halteelement 27 (Figur 2, 4) sitzt jedoch nicht unmittelbar auf dem Abschnitt 42 des Außenumfangs des Zentralstücks 10 des Gelenksterns 3 auf. Vielmehr wird zunächst ein Zentrierelement 44 (Figur 3, 4) das einen Ringabschnitt 45 sowie in Längsrichtung 11 davon abstehende Zentrierlappen 46 - 48 aufweist, auf das Zentralstück 10 aufgeschoben. Die Zentrierlappen 46 - 48 werden jeweils in eine zugeordnete Längsnut 49a (vgl. Figur 3, Figur 4), die an der Außenseite des Zentralstücks 10 des Gelenksterns 3 vorgesehen ist, eingeschoben, wodurch das Zentrierelement gegen Verdrehung und axiale Verschiebung gegenüber dem Gelenkstern 3 gesichert ist. Der Ring 45 sitzt dabei auf dem Abschnitt 42 des Zentralstücks 10 auf. An der Außenseite der Zentrierlappen 46-48 sind Zentrierflächen 49, 50 vorgesehen, die an den Formschlusselementen 5-7, das heißt in einem Bereich, in dem die plattenartigen Elemente 8, 9 zusammenlaufen, anliegen.

Die Zentrierflächen 49, 50 der Zentrierlappen 46 - 48 greifen im zusammengebauten Zustand in "Rastausnehmungen" ein, die an der jeweiligen Innenseite der Formschlusselemente 5 - 7 vorgesehen sind. In der in Figur 3 gezeigten perspektivischen Darstellung der Gelenkglocke 2 sind die "Rastausnehmungen" 5a und 7a der Formschlusselemente 5 bzw. 7 ersichtlich.

Funktional betrachtet erfüllt das Zentrierelement 44 mehrere Aufgaben.

Zum einen wird der Gelenkstern durch das Zentrierelement 44 in bezug auf die Gelenkglocke 2 zentriert. Wie am besten aus Figur 2 ersichtlich ist, ist der Ring 28 des Halteelements 27 auf den Ring 45 des Zentrierelementes 44 aufgeschoben. Der Ring des Halteelementes 26 ist unmittelbar auf den Abschnitt 43 des Zentralstücks 10 aufgeschoben.

Eine weitere wesentliche Funktion des Zentrierelement 44 besteht darin, dass es die Funktion eines "Kugelgelenks" ermöglicht. Die Zentrierflächen 49, 50 können nämlich, wie aus Fig. 3 ersichtlich ist, ballig bzw. kugelförmig gestaltet sein. Dies ermöglicht ein Verschwenken des Zentrierelements 44 und somit ein Verschwenken des Gelenksterns 3 in Bezug auf die Gelenkglocke 2. Beim Verschwenken gleiten die Zentrierflächen 49, 50 in den Rastausnehmungen 5a, 7a. Des Weiteren wird durch das Zentrierelement 44 ein axiales Verschieben bzw. "Auseinanderfallen" des Gelenksterns 3 und der Gelenkglocke 2 bei Auftreten von Axialkräften verhindert.

Es sei ausdrücklich darauf hingewiesen, dass eine derartige "Kugelgelenkfunktion" bei allen in der vorliegenden Patentanmeldung enthaltenen Ausführungsbeispielen vorgesehen sein kann, auch wenn dies im Zusammenhang mit den einzelnen Ausführungsbeispielen nicht immer ausdrücklich erwähnt ist.

Bei der Übertragung eines Drehmoments vom Gelenkstern 3 auf die Gelenkglocke 2, oder umgekehrt, werden die elastischen Zwischenelemente 20 - 25 mit ihren konvexen Außenseiten gegen die konkav geformten Bereiche der Arme 14-16 des Gelenksterns 3 gepresst. In Abhängigkeit von den Stoffeigenschaften des Materials, aus dem die elastischen Zwischenelemente 20 - 25 hergestellt sind und den Abmessungen der elastischen Zwischenelemente 20 - 25 bestimmt sich die Torsionssteifigkeit und das Dämpfungsverhalten des Gelenkwellengelenks 1.

Nicht nur aufgrund der kugelgelenkartigen Lagerung des Zentrierelements 44 in den Rastausnehmungen 5a, 7a der Formschlusselemente, sondern auch aufgrund der Elastizität der elastischen Zwischenelemente 20 - 25 weist das Gelenkwellengelenk 1 einen gewissen Schwenk- bzw. Kippfreiheitsgrad des Gelenksterns 3 in bezug auf die Gelenkglocke 2 auf. Das Gelenkwellengelenk 1 weist ferner einen Schiebefreiheitsgrad auf. Ein in die Verzahnung 13 des Gelenksterns 3 eingeschobener Wellenzapfen (nicht dargestellt) kann nämlich in Längsrichtung 11 relativ zum Gelenkstern 3 verschoben werden. Alternativ oder ergänzend dazu kann auch vorgesehen sein, dass der Gelenkstern 3 zusammen mit den elastischen Elementen 20, 25 in gewissem Umfang längsverschieblich bezüglich der Gelenkglocke 2 angeordnet ist.

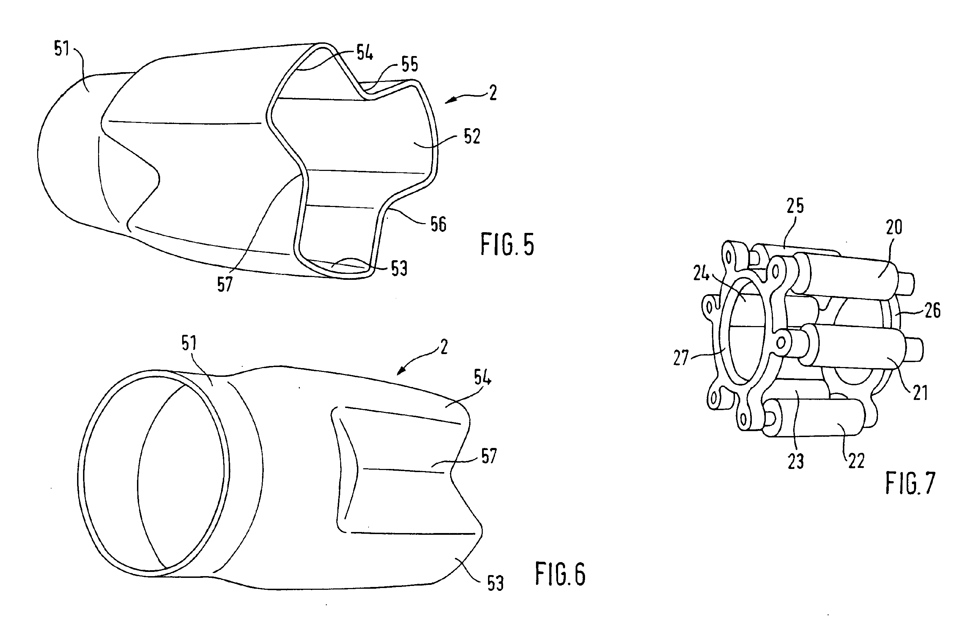

Die Figuren 5 und 6 zeigen jeweils eine dreidimensionale Ansicht eines weiteren Ausführungsbeispiels einer Gelenkglocke 2. Die Gelenkglocke 2 ist bei diesem Ausführungsbeispiel aus einem entsprechend umgeformten Ende eines Rohres 51 gebildet. Charakteristisch für dieses Ausführungsbeispiel ist, dass die Außenkontur der Gelenkglocke 2 im wesentlichen gleich der "dreiarmigen" Innenkontur ist und dass die Wandstärke der Gelenkglocke 2 über den gesamten Umfang im wesentlichen konstant ist. Die Gelenkwellenglocke 2 weist drei Rohrausbuchtungen 52 - 54 auf, in welche die Arme eines Gelenksterns (vgl. Figur 1) einführbar sind. Die Rohrausbuchtungen 52 - 54 haben in Umfangsrichtung voneinander jeweils einen Abstand von 120°. Die Rohrausbuchtungen 52 - 54 sind durch Rohrabschnitte, die als Rohreinbuchtungen 55 - 57 bezeichnet werden können, miteinander verbunden. Die Form der Rohreinbuchtungen 55 - 57 sowie die Rohrdicke bestimmen maßgeblich die Torsionssteifigkeit der Gelenkglocke 2.

Figur 7 zeigt die über die Halteelemente 26, 27 käfigartig miteinander verbundenen elastischen Zwischenelemente 20 - 25.

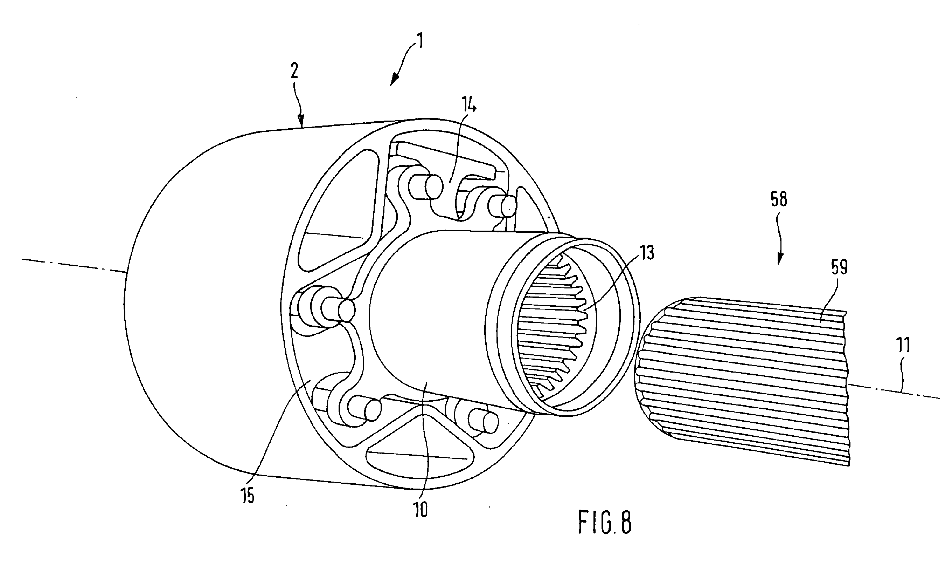

Figur 8 zeigt das Gelenkwellengelenk 1 der Figur 1 - 4, wobei hier besonders gut das Zentralstück 10 des Gelenksterns 3 zu sehen ist, das an seiner Innenseite ein in Längsrichtung 11 verlaufendes Kerbzahnprofil 13 aufweist. In das Kerbzahnprofil 13 des Gelenksterns 3 kann ein Wellenzapfen 58, der ein entsprechendes Kerbzahnprofil 59 aufweist, eingeschoben werden.

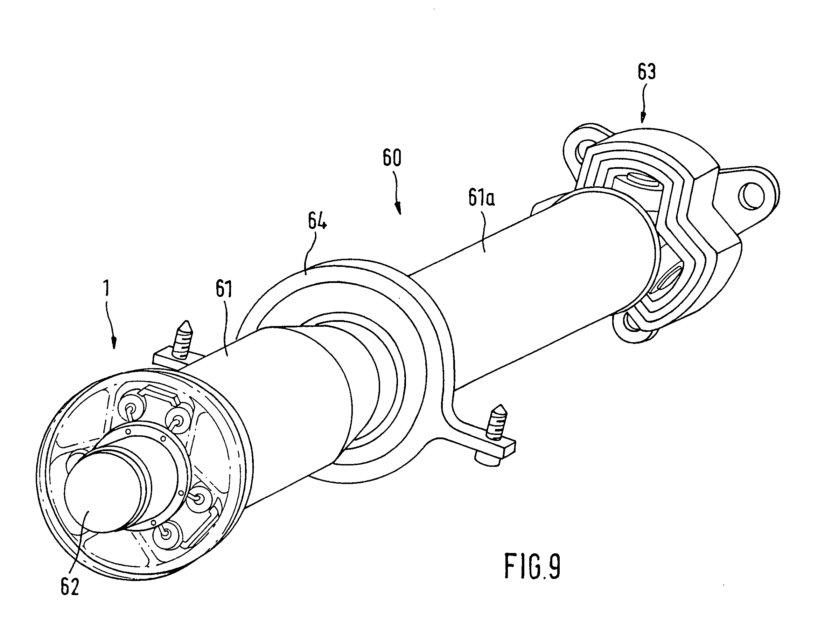

Figur 9 zeigt eine Gelenkwellenanordnung 60 mit einer Gelenkwelle, deren Gelenkwellenabschnitte zur besseren Unterscheidung mit den Bezugszeichen 61 und 61 a bezeichnet sind. Der Gelenkwellenabschnitt 61 ist über ein erstes Gelenkwellengelenk 1 mit einer Getriebeausgangswelle 62 verbunden und der Gelenkwellenabschnitt 61a ist über ein Gelenkwellengelenk 63 mit einem Hinterachsgetriebe (nicht dargestellt) verbunden. Die Gelenkwelle 61, 61 a ist über ein hier nur schematisch dargestelltes Kugellager 64 an einem Unterboden (nicht dargestellt) eines Fahrzeugs gelagert. Der Aufbau der Gelenkwellengelenke und des Kugellagers werden im folgenden noch näher erläutert.

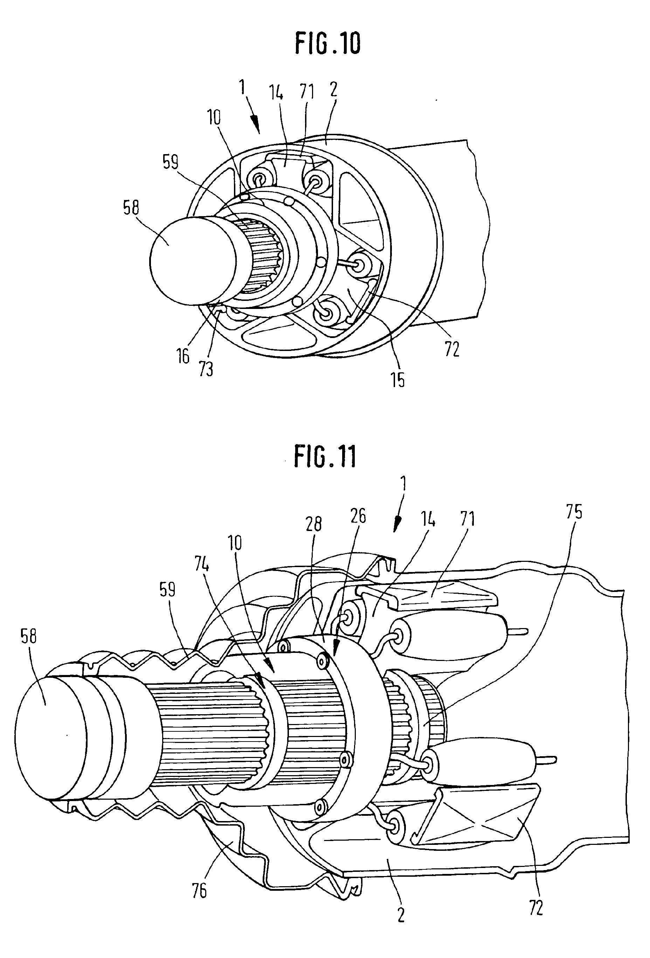

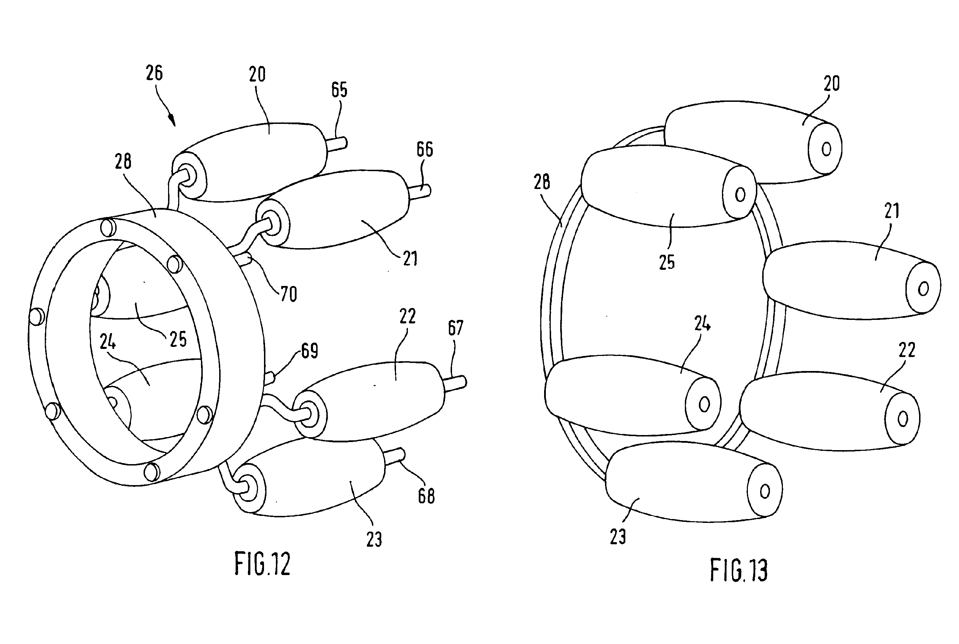

Die Figuren 10-14 zeigen ein weiteres Ausführungsbeispiel eines Gelenkwellengelenks 1. Die Gelenkglocke 2 ist sehr ähnlich aufgebaut wie bei dem in den Figuren 1-4 gezeigten Ausführungsbeispiel und braucht daher nicht näher erläutert werden. In die Gelenkglocke 2 ist ein dreiarmiger Gelenkstern eingesetzt, der ein Zentralstück 10 aufweist, auf das ein Ring 28 eines Halteelementes 26 aufgeschoben ist, was am besten aus den Figuren 11 und 12 ersichtlich ist. Von dem Ring 28 stehen in seiner Axialrichtung Federdrahtelemente 65 - 70 ab. Auf den Federdrahtelementen 65 - 70 sind die elastischen Zwischenelemente 20 - 25 angeordnet. Im Unterschied zu dem in den Figuren 1-4 gezeigten Ausführungsbeispiel sind die elastischen Zwischenelemente 20 - 25 ballig bzw. kegelig ausgeführt. Der Ring 28 kann beispielsweise aus Stahl sein. Figur 13 zeigt eine Variante, bei der der Ring 28 einstückig mit den elastischen Zwischenelementen 20 - 25 verbunden ist und aus dem selben Material hergestellt ist, wie die elastischen Zwischenelemente 20 - 25.

Wie aus den Figuren 10 und 11 ersichtlich ist, ist an den freien Enden der Arme 14-16 des Gelenksterns von außen her jeweils ein elastisches plattenartiges Element 71 - 73 angeordnet. Die elastischen plattenartigen Elemente 71 - 73 liegen an der Innenseite der Gelenkglocke 2 an. Aufgrund ihrer Elastizität erlauben sie eine gewisse Schwenk- bzw. Knickbewegung von wenigen Winkelgraden des Gelenksterns 3 bzw. des Wellenzapfens 58 gegenüber der Gelenkglocke 2. Wie am besten aus Figur 11 ersichtlich ist, sind die elastischen plattenartigen Elemente 71 - 73 an ihrer an der Innenseite der Gelenkglocke 2 anliegenden Seite zu ihren Rändern hin leicht abgeschrägt, ähnlich der Dachform eines Walmdachs. Die elastischen plattenartigen Elemente sind also leicht "ballig", wodurch Schwenk- bzw. Knickbewegungen von wenigen Winkelgraden ermöglicht werden.

Wie am besten aus Figur 11 ersichtlich ist, ist der Wellenzapfen 58 über sein Kerbzahnprofil 59 in Drehrichtung mit dem Zentralstück 10 des Gelenksterns 3 drehgekoppelt. Ferner sind zwischen dem Wellenzapfen 58 und der Innenseite des Zentralstücks 10 zwei Dämpfungs- bzw. Klemmringe 74, 75 axial voneinander beabstandet angeordnet. Die Dämpfungs- bzw. Klemmringe 74, 75 können beispielsweise aus einem Hartgummi bestehen. Sie werden vor der Montage auf den Wellenzapfen 58 aufgeschoben und zusammen mit dem Wellenzapfen 58 in das Zentralstück 10 des Gelenksterns eingepresst. Sie zentrieren den Wellenzapfen 58 im Zentralstück 10, erlauben jedoch aufgrund ihrer Elastizität geringfügige Kippbewegungen des Wellenzapfens 58 gegenüber dem Gelenkstern. Derartige Dämpfungs- bzw. Klemmringe 74, 75 können auch bei allen anderen Ausführungsbeispielen vorgesehen sein.

Vollständigkeitshalber wird noch auf eine Faltenbalgdichtung 76 hingewiesen, deren eines Ende auf den Wellenzapfen 58 aufgeschoben ist und deren anderes Ende auf die Außenseite der Gelenkglocke 2 aufgeschoben ist und ein Eindringen von Schmutz und Wasser in das Gelenkwellengelenk 1 verhindert.

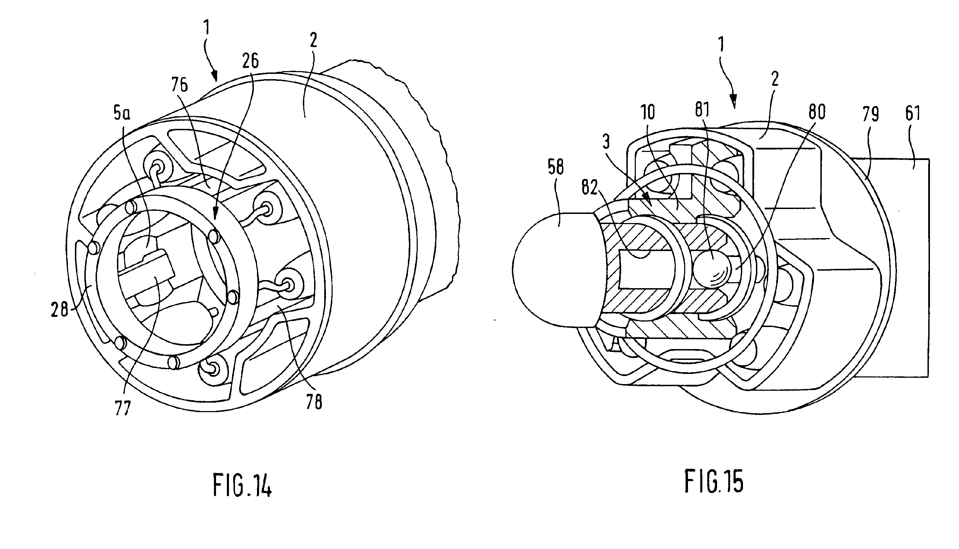

Figur 14 zeigt eine Variante des in Figur 12 gezeigten Halteelementes 26. Bei dieser Variante stehen von dem Stahlring 28 in Axialrichtung drei Laschen bzw. elastische Lappen 76 - 78 ab. Die Halteelemente 76 - 78 weisen an ihrer der Innenseite der Gelenkglocke 2 zugewandten Außenseite jeweils Formschlusselemente, zum Beispiel Rastnasen, Kugelkalotten oder ähnliches auf, die in entsprechende Ausnehmungen, die an der Innenseite der Gelenkglocke 2 vorgesehen sind, eingerastet sind. Die an den Enden der elastischen Lappen 76 - 78 vorgesehenen Formschlusselemente verhindern, dass das Gelenkwellengelenk in zusammengebautem Zustand auseinandergezogen werden kann. Gleichzeitig ermöglichen sie allerdings - ähnlich wie bei einem Kugelgelenk - ein Verschwenken des Gelenksterns (in Fig. 14 nicht dargestellt) in Bezug auf die Gelenkglocke. Die Formschlusselemente gelten dabei in den muldenförmigen Rastausnehmungen der Gelenkglocke 2, wobei in der in Fig. 14 gezeigten Darstellung nur die muldenförmige Rastausnehmung 5a zu sehen ist.

Alternativ dazu können selbstverständlich auch an der Innenseite der Gelenkglocke 2 Rasterhebungen und in den Lappen bzw. Laschen 76 - 78 muldenförmige Ausnehmungen vorgesehen sein, in welche die Rasterhebungen gleitend eingerastet sind. Jedenfalls sind die Laschen bzw. Lappen 76 - 78 und somit der Ring 28 in Axialrichtung formschlüssig mit der Gelenkglocke 2 verbunden. Somit sind auch die elastischen Zwischenelemente 20 - 25 in Axialrichtung gegen Verschieben in Bezug auf die Gelenkglocke 2 gesichert.

Figur 15 zeigt ein weiteres Ausführungsbeispiel eines Gelenkwellengelenks 1. Die Gelenkwellenglocke 2 kann beispielsweise als Schmiedeteil ausgeführt sein. Sie zeichnet sich dadurch aus, dass ihre Außenkontur im Bereich des Gelenksterns 3 im wesentlichen der Innenkontur entspricht und dass sie in diesem Bereich eine über den Umfang im wesentlichen konstante Wandstärke hat. Die Gelenkglocke 2 kann beispielsweise über eine Schweißnaht 79 stoffschlüssig mit einer Gelenkwelle 61 verbunden sein. Bei dem in Figur 15 gezeigten Ausführungsbeispiel ist die Gelenkglocke 2 über eine Kugelführung mit dem in das Zentralstück 10 des Gelenksterns eingeschobenen Wellenzapfen 58 verbunden. Hierzu ist ein Stift 80 mit einer Kugel 81 vorgesehen. Der Stift 80 steht mittig in Axialrichtung von der Gelenkglocke 2 ab. In dem Wellenzapfen 58 ist eine zentrale Bohrung 82 vorgesehen, in der bei einer Verschiebung des Wellenzapfens 58 relativ zur Gelenkglocke 2 die Kugel 81 entlang gleiten kann, wodurch die Gelenkglocke 2 relativ zum Wellenzapfen 58 bzw. relativ zu dem Gelenkstern 3 geführt wird.

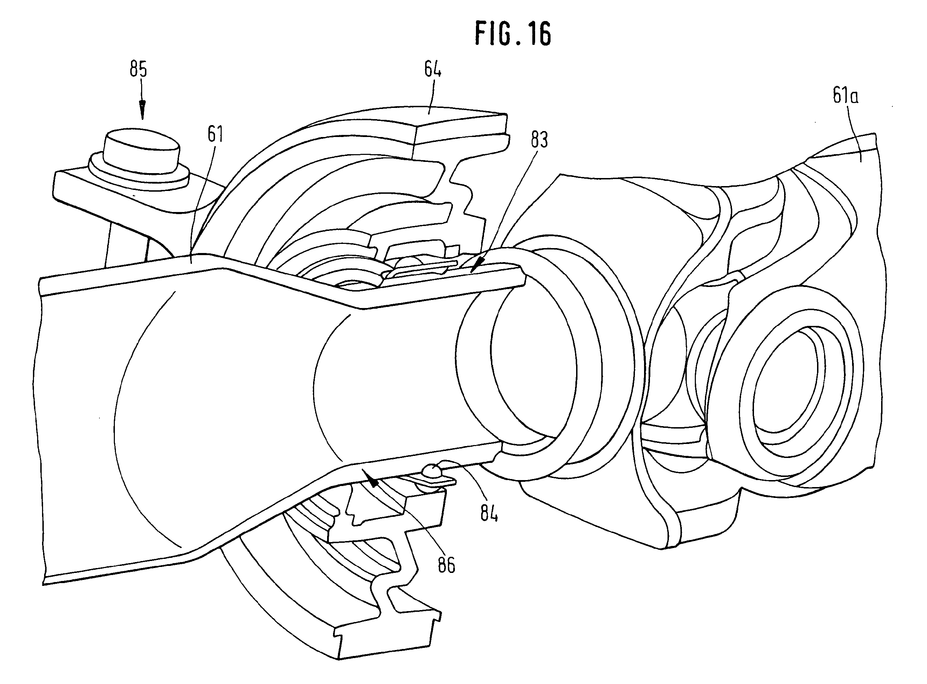

Figur 16 zeigt in vergrößerter Darstellung die Lagerung der Gelenkwelle 61, 61 a (vgl. Figur 9). Bei diesem Ausführungsbeispiel ist an der Außenseite der Gelenkwelle 61 eine umlaufende Kugellaufbahn 83 vorgesehen, in der Kugeln 84 des Kugellagers 64 laufen. Das Kugellager 64 ist über eine Verschraubung 85 mit einem Fahrzeug, zum Beispiel einem Fahrzeugunterboden verbunden. Zur Erreichung einer möglichst kompakten Bauweise der Gelenkwellenanordnung ist das Gelenkwellenrohr 61 in einem Bereich 86, in dem das Kugellager 64 sitzt, auf einen kleineren Durchmesser rundgeknetet, wobei, wie aus Figur 16 ersichtlich ist, in dem Bereich 86 und insbesondere im Bereich des Kugellagers 64 eine Materialaufdickung entsteht.

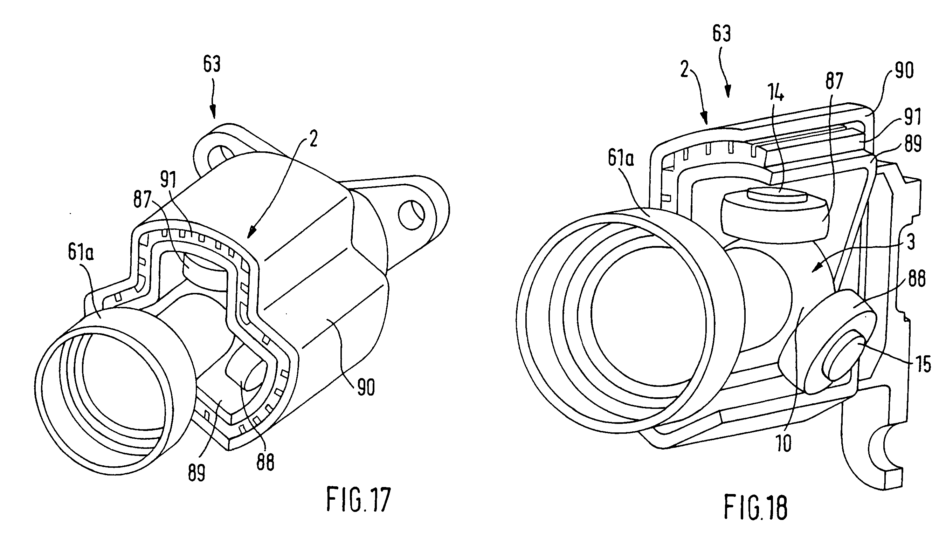

Figur 17 zeigt das in Figur 9 bereits erwähnte Gelenkwellenlager 63. Figur 18 zeigt das Gelenkwellenlager 63 in Schnittdarstellung. Ähnlich wie bei den zuvor beschriebenen Ausführungsbeispielen ist ein Gelenkstern 3 vorgesehen. Der Gelenkstern 3 weist drei in einem Winkelabstand von 120° angeordnete Gelenkarme auf, von denen in Figur 18 lediglich die beiden Gelenkarme 14, 15 dargestellt sind. An den Gelenkarmen sind ringartige bzw. rollenartige elastische Zwischenelemente 87, 88 angeordnet. Der Gelenkstern 3 greift mit seinen Gelenkarmen 14, 15 und den im Bereich der freien Enden der Gelenkarme 14, 15 angeordneten elastischen Zwischenelementen 87, 88 in die Gelenkglocke 2 ein.

Die Gelenkglocke 2 ist bei dem in den Figuren 17, 18 geführten Ausführungsbeispiel zweiteilig ausgeführt. Sie besteht aus einem in einer Stirnansicht gesehenen sternförmigen Glockeninnenteil 89, das in ein in der Stirnansicht gesehen ebenfalls sternförmiges Glockenaußenteil 90 eingesetzt ist. Das Glockeninnenteil 89 und das Glockenaußenteil 90 weisen über ihren Umfang jeweils im wesentlichen die gleiche Wandstärke auf. Zwischen dem Glockeninnenteil und dem Glockenaußenteil ist ein Zwischenraum vorgesehen, in den ein elastisches Einlegeteil bzw. eine Elastomerzwischenschicht 91 eingebracht ist. Die Elastomerzwischenschicht 91 kann auf das Glockeninnenteil 89 oder auf das Glockenaußenteil 90 aufvulkanisiert sein.

Bei einer Drehmomentübertragung vom Gelenkstern 3 auf die Gelenkglocke 2 wird der Gelenkstern 2 in bezug auf die Gelenkglocke 3 verdreht, wobei sich die elastische Zwischenschicht 91 deformiert. Zusätzlich zu den elastischen Zwischenelementen 87, 88 ist also ein weiteres elastisches Zwischenelement in Form der zwischen die beiden Glockenteile 89, 90 eingebrachten elastischen Zwischenschicht 91 vorgesehen.

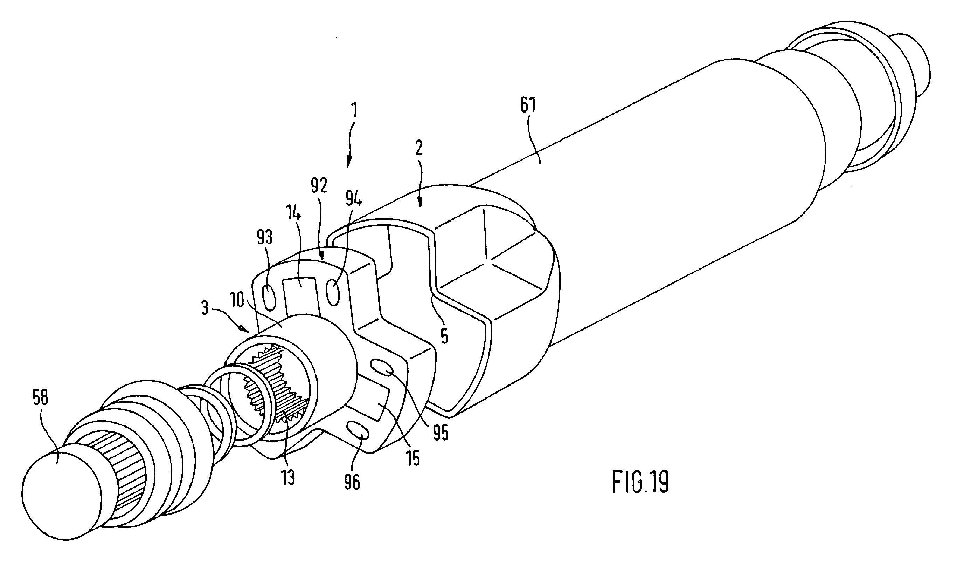

Figur 19 zeigt ein Ausführungsbeispiel, bei dem die Gelenkwelle 61 an ihrem einen Ende ähnlich wie bei dem Ausführungsbeispiel der Figuren 5 und 6 zu der Gelenkglocke 2 umgeformt ist. Die Gelenkglocke 2 ist also integraler Bestandteil der Gelenkwelle 61. Der Gelenkstern 3 weist auch hier ein Zentralstück 10 mit einer Innenverzahnung 13 sowie drei Gelenkarmen auf, von denen hier lediglich die beiden Gelenkarme 14, 15 zu sehen sind. Auf dem Gelenkstern 3 bzw. auf die Arme 14, 15 des Gelenksterns 3 ist eine elastische Zwischenschicht 92 aufvulkanisiert. Auf beiden Seiten neben den Armen 14, 15 weist die elastische Zwischenschicht 92 Bereiche 93 - 96 auf, in denen die Materialdichte des elastischen Zwischenmaterials 92 geringer ist. Die Bereiche 93 - 96 können auch Aussparungen bzw. Löcher sein. Durch die Stoffeigenschaften der elastischen Zwischenschicht 92 und durch die Größe bzw. Dimensionierung der Bereiche 93 - 96 ist die Steifigkeit der elastischen Zwischenschicht 92 maßgeblich bestimmt.

Der Gelenkstern 3 mit der elastischen Zwischenschicht 92 ist in die Gelenkglocke 2 eingepresst. Die elastische Zwischenschicht 92 federt und dämpft Drehmomentstöße zwischen dem Gelenkstern 3 und der Gelenkglocke 2 bzw. der Gelenkwelle 61.

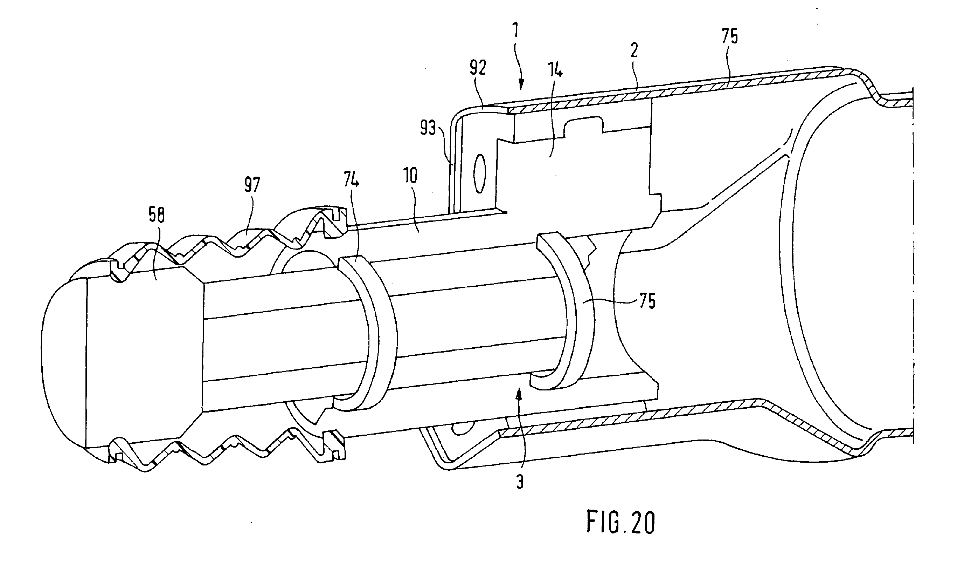

Figur 20 zeigt eine Schnittdarstellung des Gelenkwellengelenks 1 der Figur 19. Der Wellenzapfen 58 ist über eine hier nicht näher dargestellte Kerbverzahnung drehfest mit dem Gelenkstern 3 verbunden. Auf den Wellenzapfen 58 sind ähnlich wie bei dem in Figur 1 gezeigten Ausführungsbeispiel Dämpfungs- bzw. Klemmringe 74, 75 aufgeschoben. Die Dämpfungs- bzw. Klemmringe 74, 75 zentrieren den Wellenzapfen 58 in Bezug auf den Gelenkstern 3. Die Dämpfungs- bzw. Klemmringe 74, 75 können aus einem elastischen Material, zum Beispiel einem Hartgummi sein, wodurch ein gewisser Schwenk- bzw. Knickfreiheitsgrad des Wellenzapfens 58 in Bezug auf den Gelenkstern 3 ermöglicht wird. Vollständigkeitshalber sei noch ein Faltenbalg 97 erwähnt, welcher von außen auf den Wellenzapfen 58 und das Zentralstück 10 des Gelenksterns 3 aufgeschoben ist und ein Eindringen von Wasser und Schmutz verhindert.

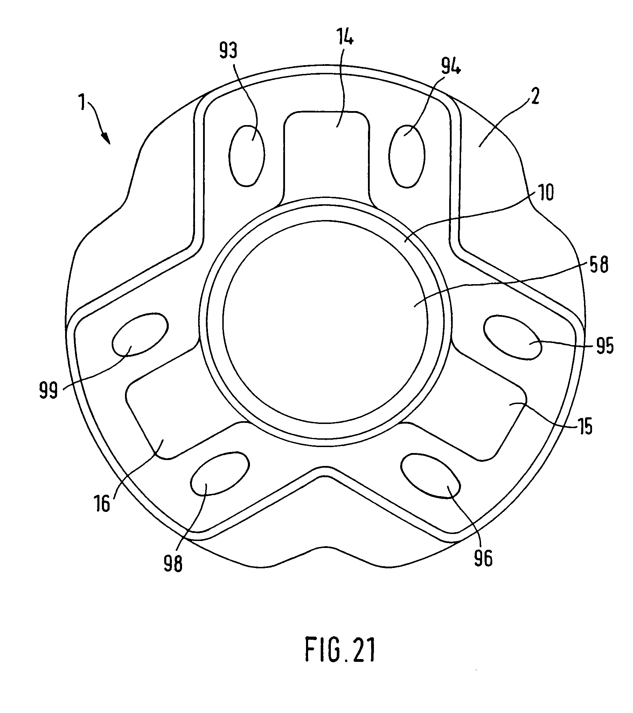

Figur 21 zeigt das Gelenkwellengelenk 1 der Figuren 19 und 20 in einer Stirnansicht vom Wellenzapfen 58 aus gesehen.

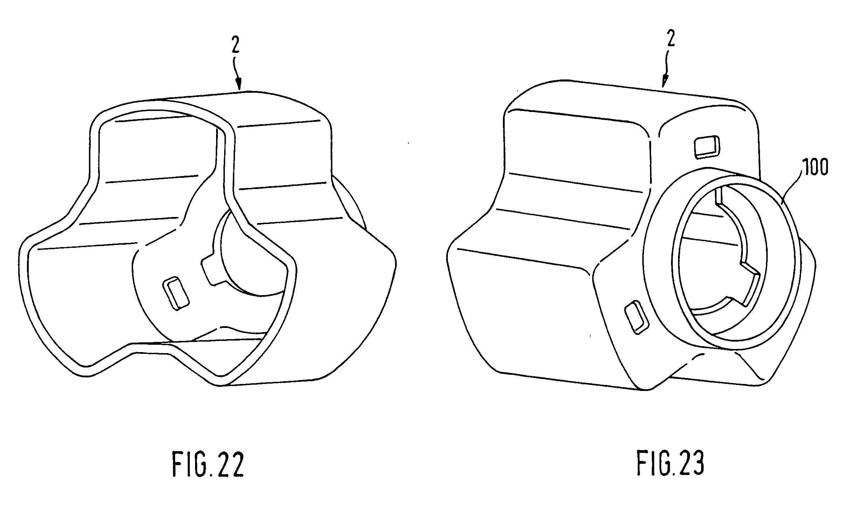

Die Figuren 22 und 23 zeigen in verschiedenen dreidimensionalen Ansichten eine geschmiedete Gelenkglocke, die in einem Flanschbereich 100 stumpf an eine Gelenkwelle (nicht dargestellt) angeschweißt sein kann.

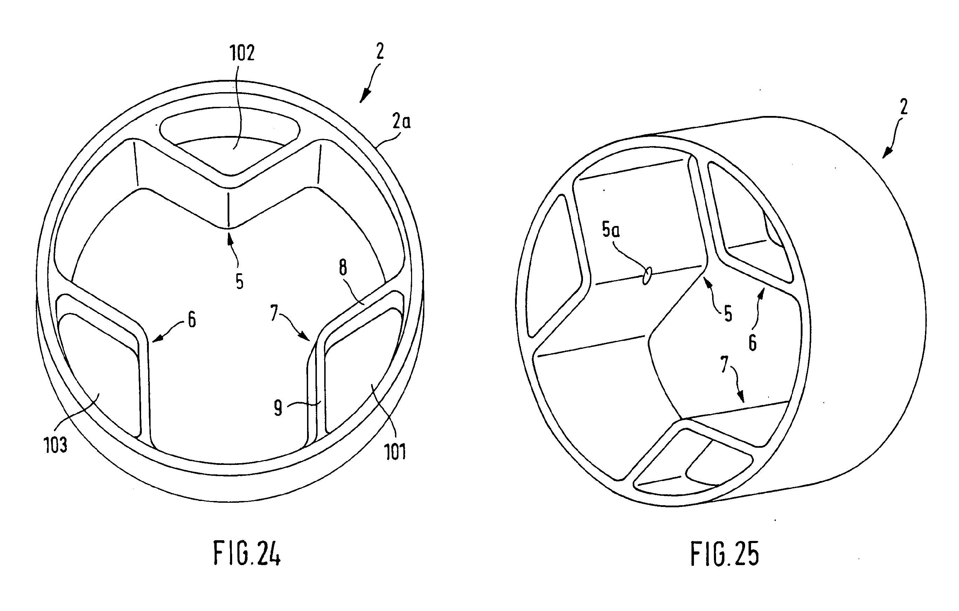

Figur 24 zeigt eine Variante der in den Figuren 1 - 4 gezeigten Gelenkglocke 2. Bei diesem Ausführungsbeispiel ist in die Formschlusselemente, d. h. zwischen die jeweiligen plattenartigen Elemente 8, 9 jeweils eine Versteifungsplatte 101 - 103 eingebracht. Die Versteifungsplatten 101 - 103 können mit den plattenartigen Elementen und mit dem äußeren "Gelenkglockenring" 2a verschweißt sein. Durch die Versteifungsplatten 101 - 103 kann die Torsionssteifigkeit der plattenartigen Elemente 8, 9 und der gesamten Gelenkglocke 2 erheblich vergrößert werden.

Figur 25 zeigt die Gelenkglocke der Figur 24 aus einer etwas anderen Perspektive. In dieser Darstellung ist besonders gut die Rastausnehmung 5a des Formschlusselements 5 zu sehen. Wie bereits im Zusammenhang mit Figur 3 erläutert, greifen die Zentrierflächen des Zentrierelements in die jeweils zugeordnete Rastausnehmung ein, was ein Verschwenken des Gelenksterns in bezug auf die Gelenkglocke ermöglicht, ähnlich wie bei einem Kugelgelenk.

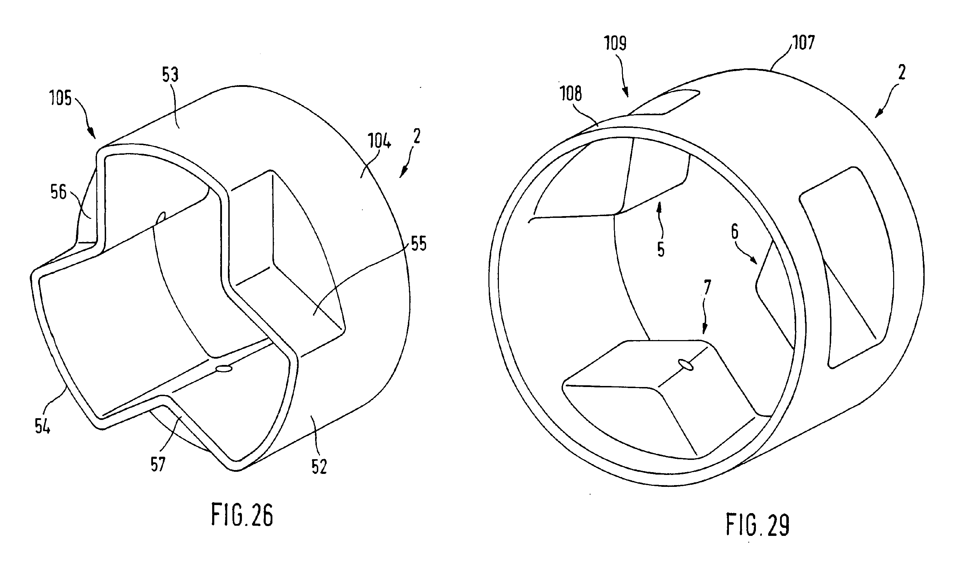

Figur 26 zeigt ein weiteres Ausführungsbeispiel einer Gelenkglocke 2. Bei diesem Ausführungsbeispiel weist die Gelenkglocke 2 einen kreisrohrförmigen ersten Endabschnitt 104 und einen Endabschnitt 105 auf, der ähnlich wie bei dem in den Figuren 5, 6 gezeigten Ausführungsbeispiel durch drei Rohrausbuchtungen 52 - 54 und drei Rohreinbuchtungen 55 - 57 gebildet ist. Auch durch eine derartige Gelenkglockenform kann eine hohe Torsionssteifigkeit erreicht werden.

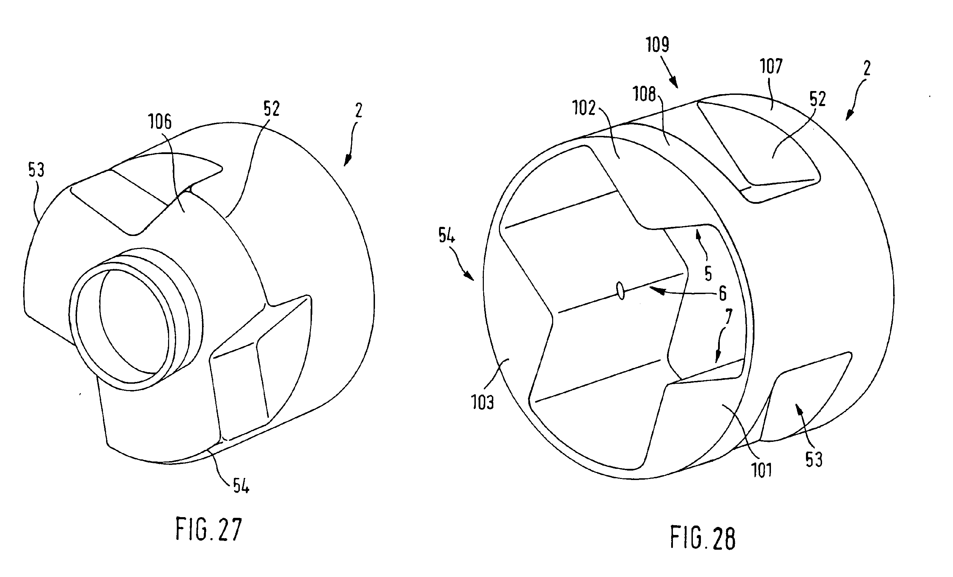

Figur 27 zeigt ein Ausführungsbeispiel, bei der die Gelenkglocke 2 eine die Rohrausbuchtungen 52 - 54 überdeckende "sternförmige" Abschlussplatte 106 aufweist. Die Abschlussplatte 106 erfüllt, ähnlich wie die Versteifungsplatten 101 - 103 des Ausführungsbeispiels der Figur 24, eine Versteifungsfunktion.

Figur 28 zeigt ein Ausführungsbeispiel einer Gelenkglocke 2, die symmetrisch aufgebaut ist. Die Gelenkglocke 2 kann anschaulich in zwei kreisrohrförmige Endabschnitte 107, 108 und einen dazwischen liegenden Mittelabschnitt 109 unterteilt werden, der die "Rohreinbuchtungen" 52 - 54 aufweist. Ähnlich wie beim Ausführungsbeispiel der Figur 24 sind Versteifungsplatten 101 - 103 vorgesehen, die hier jedoch an den axialen Enden der Gelenkglocke bzw. der Rohreinbuchtungen 52 - 54 vorgesehen sind.

Wie aus Figur 28 ersichtlich ist, erstrecken sich die Formschlusselemente 5 - 7 über die gesamte axiale Länge der Gelenkglocke 2.

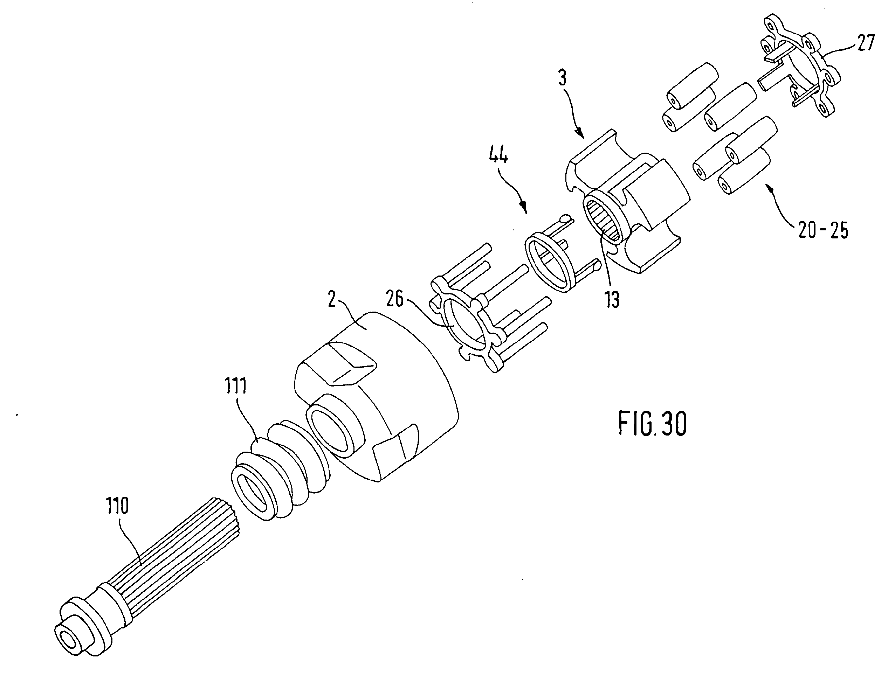

Figur 29 zeigt eine Variante des in Figur 28 gezeigten Ausführungsbeispiels. Im Unterschied zu Figur 28 erstrecken sich bei Figur 29 die Formschlusselemente 5-7, hier nur über den Mittelbereich 109 der Gelenkglocke 2, d. h. nicht bis in die axialen Endbereiche 107 - 108.

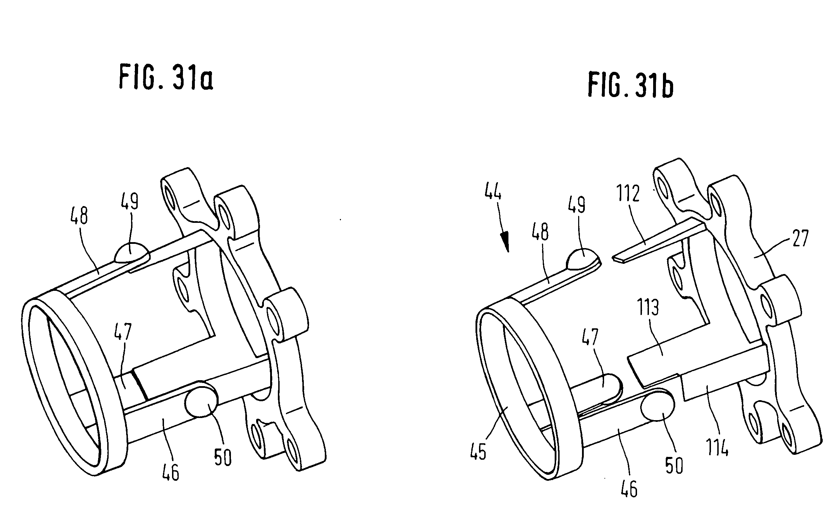

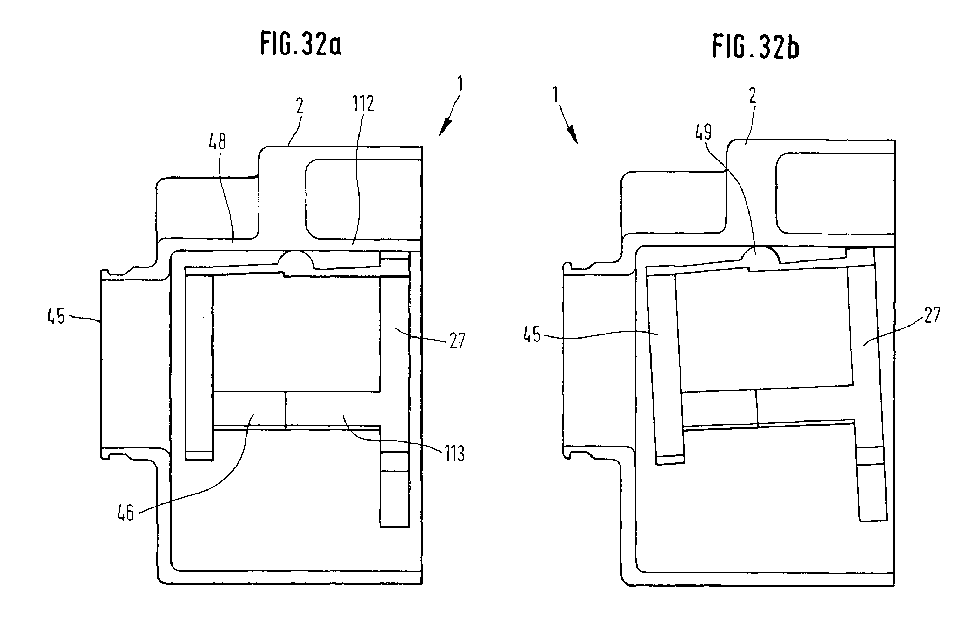

Figur 30 zeigt eine Explosionsdarstellung eines weiteren Ausführungsbeispiels eines Gelenkwellengelenks. Bei diesem Ausführungsbeispiel ist die bereits im Zusammenhang mit Figur 27 erläuterte Gelenkglocke 2 gezeigt. Alternativ dazu können selbstverständlich auch andere Gelenkglocken verwendet werden. Ähnlich wie bei dem in Figuren 1-4 gezeigten Ausführungsbeispiel werden die tonnenartigen elastischen Zwischenelemente 20 - 25 durch zwei Halteelemente 26, 27 in Bezug zueinander und in bezug auf den Gelenkstern 3 positioniert. Bei diesem Ausführungsbeispiel wirkt das Halteelement 27 mit dem Zentrierelement 44 zusammen, was im Zusammenhang mit den Figuren 31 und 32 noch näher erläutert wird.

Analog zum Ausführungsbeispiel der Figuren 1 - 4 weist der Gelenkstern 3 eine in Längsrichtung des Gelenkwellengelenks verlaufenden Kerbverzahnung 13 auf, in die ein mit einer Außenverzahnung versehener Wellenzapfen bzw. ein mit einer Außenverzahnung versehenes Gabelschiebestück 110 eingeschoben wird. Die Kerbverzahnung des Gabelschiebestücks 110 und des Gelenksterns 3 ist durch einen Faltenbalg 111 vor Schmutz geschützt.

Figur 31 b zeigt die Relativposition des Halteelements 27 (vgl. Figur 30) und des Zentrierelementes 44 im demontierten Zustand, Figur 31a im montierten Zustand. Das Zentrierelement 44 ist ähnlich aufgebaut wie beim Ausführungsbeispiel der Figuren 1 - 4. Es weist ein Ringabschnitt 45 sowie in Längsrichtung davon abstehende Zentrierlappen 46 - 48 auf. An den freien Enden der Zentrierlappen 46 - 48 sind die Zentrierflächen 49, 50 vorgesehen, die bei dem hier gezeigten Ausführungsbeispiel die Form von Kugelkalotten haben und mit den zugeordneten muldenförmigen Rastausnehmungen zusammenwirken, die in den Formschlusselementen der Gelenkglocke vorgesehen sind. Die kugelkalottenförmigen Zentrierflächen 49, 50 können in den muldenförmigen Rastausnehmungen gleiten und ermöglichen dadurch ein Verschwenken des Gelenksterns gegenüber der Gelenkglocke. Gleichzeitig wird im montierten Zustand eine Axialverschiebung des Gelenksterns 3 in Bezug auf die Gelenkglocke 2 verhindert.

Im Unterschied zu den bisher gezeigten Ausführungsbeispielen weist das Halteelement 27 hier zusätzlich in Längsrichtung vom Halteelement 27 abstehende Lappen 112 - 114 auf. Die Lappen 112-114 sind in Richtung zu ihren freien Enden hin keilförmig abgeflacht. Wie aus Figur 31 a ersichtlich ist, greifen die Lappen 112 - 114 im montierten Zustand unter die Zentrierlappen 46 - 48. Die Lappen 112-114 spreizen also die Zentrierlappen 46 - 48 auf und drücken sie nach außen gegen die Formschlusselemente der Gelenkglocke, wodurch die Zentrierung des Gelenksterns über die Zentrierflächen 49 - 50 verbessert wird. Da die Zentrierflächen 49 - 50 formschlüssig in die Rastausnehmungen der Formschlusselemente der Gelenkglocke eingreifen, wird durch die über die Lappen 112 - 114 erreichte "Keilverspannung" zusätzlich eine Fixierung des Gelenkssterns in bezug auf die Gelenkglocke in Axialrichtung erreicht und zwar unter Beibehaltung des Schwenkfreiheitsgrades.

Die Figuren 32a und 32b zeigen eine Schnittdarstellung zur Erläuterung des Schwenkfreiheitsgrades des Gelenkwellengelenks 1. Wie bereits im Zusammenhang mit den Figuren 31 a, 31 b erläutert spreizen die Lappen 112, 113 die zugeordneten Zentrierlappen 48 bzw. 46 in Radialrichtung auf, wodurch eine Axialfixierung in der Gelenkglocke unter Beibehaltung eines Schwenkfreiheitsgrades erreicht wird.

Figur 32b zeigt einen Zustand, in dem die Gelenkglocke 2 in bezug auf das Halteelement 27 und das Zentrierelement 44, die auf den Gelenkstern (nicht dargestellt) aufgeschoben sind, verschwenkt ist.

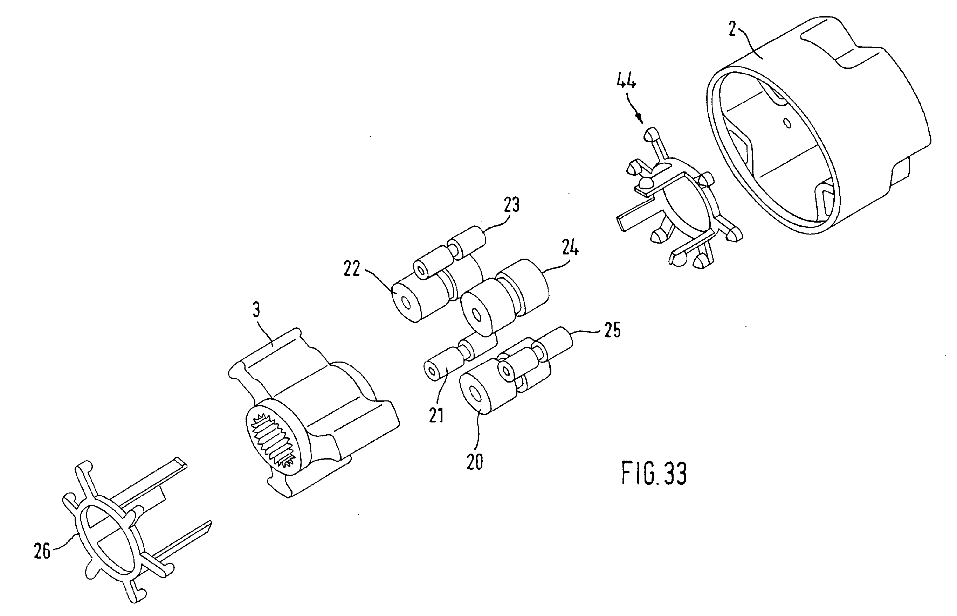

Figur 33 zeigt ein weiteres Ausführungsbeispiel eines Gelenkwellengelenks mit einer Gelenkglocke 2, einem Zentrierelement 44 und einem damit zusammenwirkendem Halteelement 26 entsprechend dem Ausführungsbeispiel der Figur 30, einem Gelenkstern 3 und elastischen Zwischenelementen 20 - 25 mit integrierten Anschlägen.

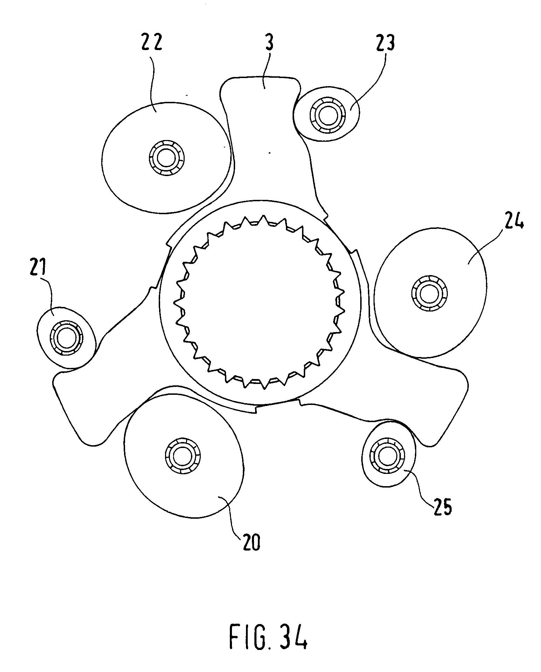

Figur 34 zeigt den Gelenkstern 3 und die elastischen Zwischenelemente 20 - 25 der Fig. 33 in Stirnansicht. Im Unterschied zu den bisher gezeigten Ausführungsbeispielen sind die einzelnen Arme des Gelenksterns und die elastischen Zwischenelemente 20 - 25 nicht symmetrisch. Vielmehr stehen die Arme des Gelenksterns 3 bei diesem Ausführungsbeispiel schräg, d.h. nicht radial nach außen ab. Wie aus Figur 34 ersichtlich ist, sind die elastischen Zwischenelemente 20, 22, 24 größer als die elastischen Zwischenelemente 21, 23, 25. Es kann beispielsweise vorgesehen sein, dass die elastischen Zwischenelemente 20, 22, 24 der Drehrichtung bei Zugbetrieb bzw. bei Zugbetrieb bzw. Vorwärtsfahrt und die elastischen Zwischenelemente 21, 23, 25 der Drehrichtung bei Schubbetrieb bzw. bei Rückwärtsfahrt zugeordnet sind.

Entsprechend den größeren, bei Zugbetrieb bzw. Vorwärtsfahrt auftretenden Drehmomenten sind die elastischen Zwischenelemente 20, 22, 24 größer bzw. "stabiler" beschaffen als die elastischen Zwischenelemente 21, 23, 25, die für Rückfahrtsfahrt vorgesehen sind.

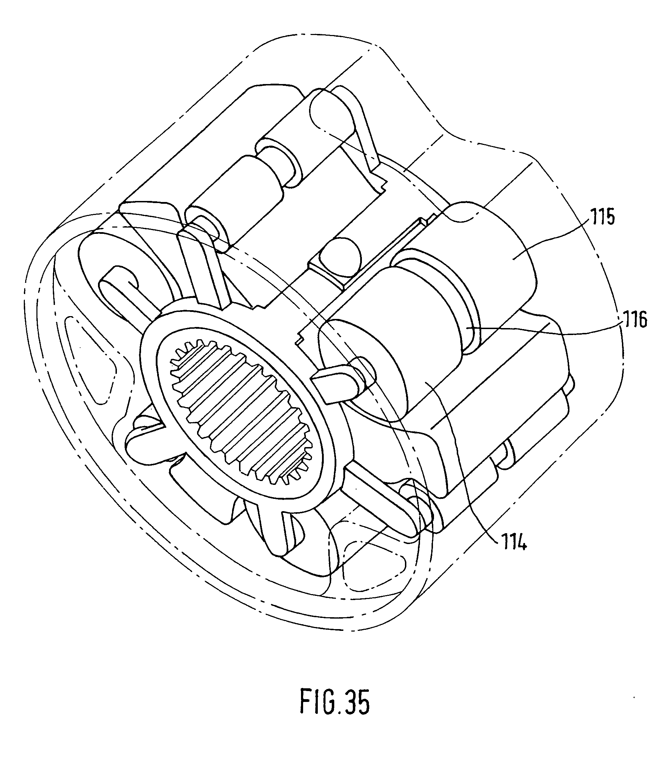

Figur 35 zeigt das in den Figuren 33, 34 dargestellte Gelenkwellengelenk in perspektivischer Darstellung.

Aus den Figuren 33 und 35 ist zu erkennen, dass die elastischen Zwischenelemente jeweils aus drei Komponenten bestehen, nämlich den elastischen Endabschnitten 114 und 115 sowie einem jeweils dazwischen angeordneten "Anschlagelement" 116, das bei dem hier gezeigten Ausführungsbeispiel durch einen Stahlring gebildet ist. Bei der Übertragung eines Drehmoments durch das Gelenkwellengelenk werden je nach Drehrichtung entweder die elastischen Zwischenelemente 20, 22, 24 (vgl. Figur 34) oder bei Schubbetrieb bzw. Rückwärtsfahrt die elastischen Zwischenelemente 21, 23, 25 belastet und die deformiert. Bei sehr großen Drehmomenten ist die Deformation so stark, dass die Anschlagelemente 116 (vgl. Figur 35) zur Anlage an den Formschlusselementen der Gelenkglocke kommen, was noch näher erläutert wird.

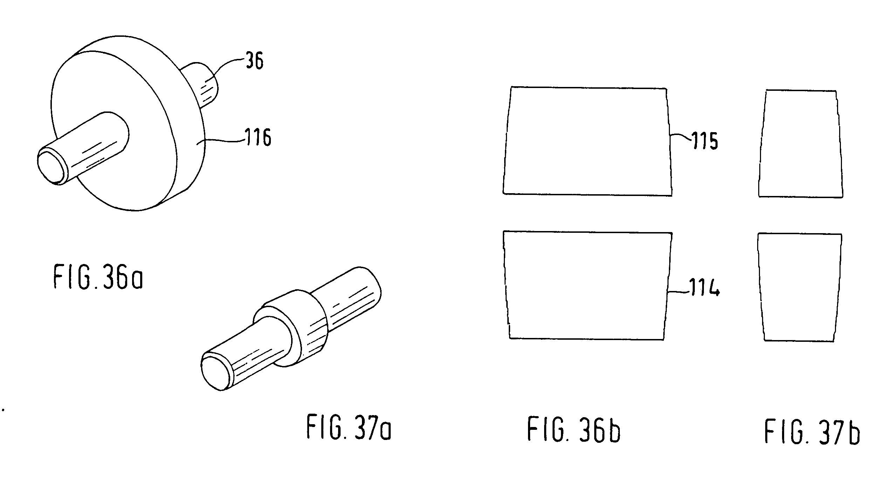

Die Figuren 36a und 36b zeigen die einzelnen Bestandteile der elastischen Zwischenelemente der Figur 35. Ein derartiges elastisches Zwischenelement besteht aus einem Haltestift 36 (vgl. auch Figur 3) einem darauf angeordneten relativ steifen Ring, bei dem es sich z. B. um einen Stahlring 116 handelt und den links bzw. rechts davon auf dem Stift 36 angeordneten elastischen Elementen 114, 115 (vgl. Figur 35). Bei dem in den Figuren 36a und 36b gezeigten elastischen Zwischenelement handelt es sich um ein "großes elastisches Zwischenelement" für Zugbetrieb bzw. Vorwärtsfahrt, bei dem in den Figuren 37a und 37b gezeigt um ein "kleines" für Schubbetrieb bzw. Rückwärtsfahrt.

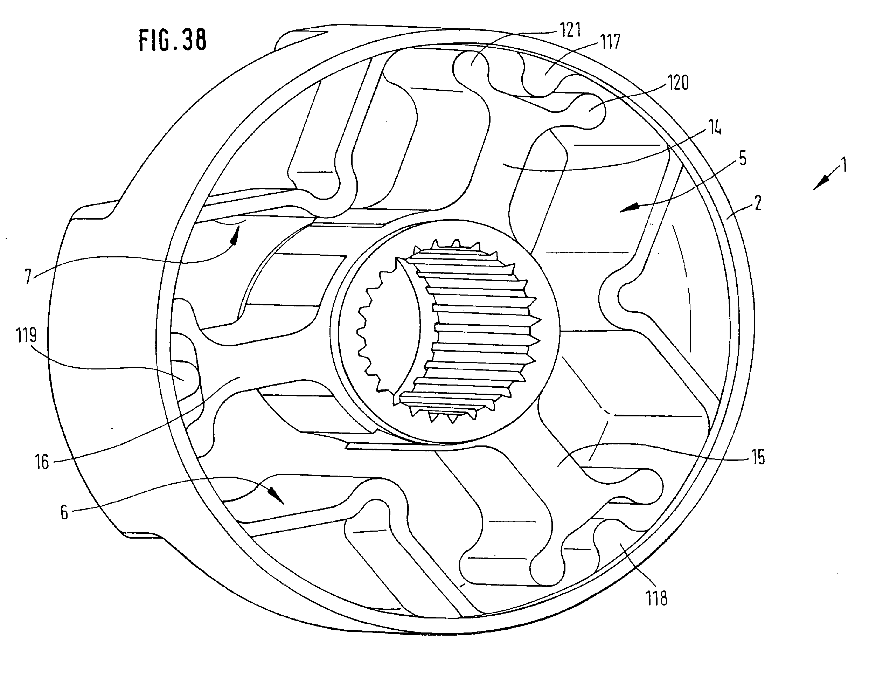

Beim Ausführungsbeispiel der Figur 38 sind an der Innenseite der Gelenkglocke 2 jeweils im Bereich zwischen den einzelnen Formschlusselementen 5 -7 rippenartige Anschlagelemente 117-118 vorgesehen, die sich in Axialrichtung der Gelenkglocke erstrecken und die radial nach innen von der Gelenkglocke abstehen. Die Arme 14-16 sind an ihrem freien Ende gabelförmig bzw. U-förmig gestaltet. Jeder der Arme 14 - 16 weist einen linken bzw. rechten "Schenkel" 120, 121 auf, die in Umfangsrichtung der Gelenkglocke 2 voneinander beabstandet sind. Die Anschlagelemente 117 - 119 ragen jeweils zwischen die beiden Schenkel 120, 121 des zugeordneten Arms 14 - 16 des Gelenksterns. Bei einer Drehmomentübertragung durch das Gelenkwellengelenk 1 kommt es zu einer Relativverdrehung des Gelenksterns in bezug auf die Gelenkglocke 2, d. h. zu einer Verformung der in Figur 38 nicht dargestellten Zwischenelemente, die jeweils zwischen den einzelnen Gelenkarmen 14-16 und den links bzw. rechts der einzelnen Arme angeordneten elastischen Zwischenelemente (nicht dargestellt). Ab einem gewissen Drehmoment ist die Verformung der elastischen Zwischenelemente und somit die Relatiwerdrehung des Gelenksterns in bezug auf die Gelenkglocke 2 so groß, dass jeweils entweder der rechte Schenkel 120 oder der linke Schenkel 121 an dem zugeordneten Anschlagelement 117 - 119 zur Anlage kommt und dann die Relativverdrehung des Gelenksterns in bezug auf die Gelenkglocke begrenzt.

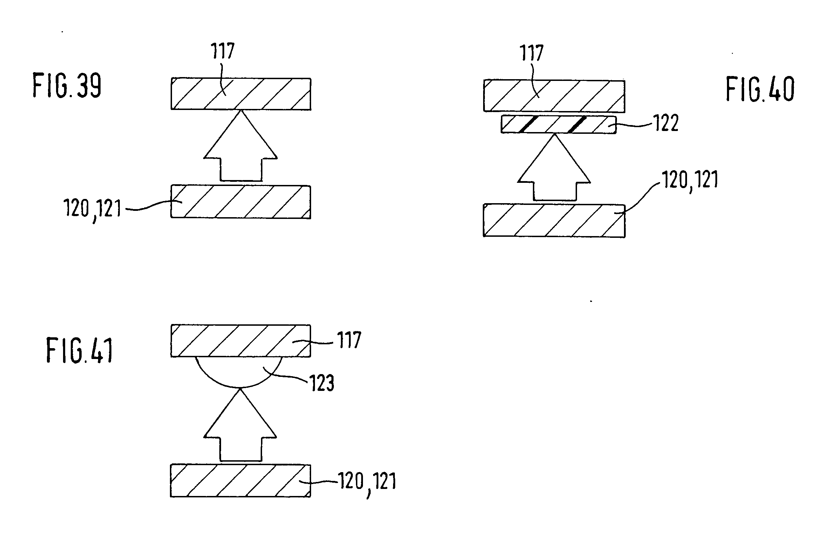

Die Figuren 39 - 41 zeigen in schematischer Darstellung verschiedene Möglichkeiten, wie die im Ausführungsbeispiel der Figur 38 gezeigten Anschläge gestaltet werden können. Bei dem in Figur 39 dargestellten Prinzip kommt einer der beiden Schenkel 120, 121 unmittelbar zur Anlage an dem Anschlagelement 117. Es findet also eine Berührung Metall-Metall statt.

Beim Ausführungsbeispiel der Figur 40 ist an dem Anschlagelement 117 zusätzlich ein Dämpfungselement 122 vorgesehen. Ein solches Dämpfungselement 122 kann alternativ oder ergänzend dazu auch an dem Schenkel 120 bzw. 121 vorgesehen sein.

Beim Ausführungsbeispiel der Figur 41 ist das Anschlagelement 117 ballig ausgeführt. Es kann beispielsweise eine Kugelkalotte, eine elliptische Form oder eine zylindrische Form haben, was entsprechend zu einer Linien- oder Punktberührung führt. Die Kugelkalotte kann aus dem selben Material wie das Anschlagelement 117 bzw. wie die Gelenkglocke hergestellt sein. Alternativ dazu kann auch ein elastisches Material verwendet werden. Selbstverständlich ist auch hier eine funktionale Umkehrung möglich, d. h. das kugelkalottenförmige Element 123 kann auch an dem Schenkel 120 bzw. 121 vorgesehen sein.

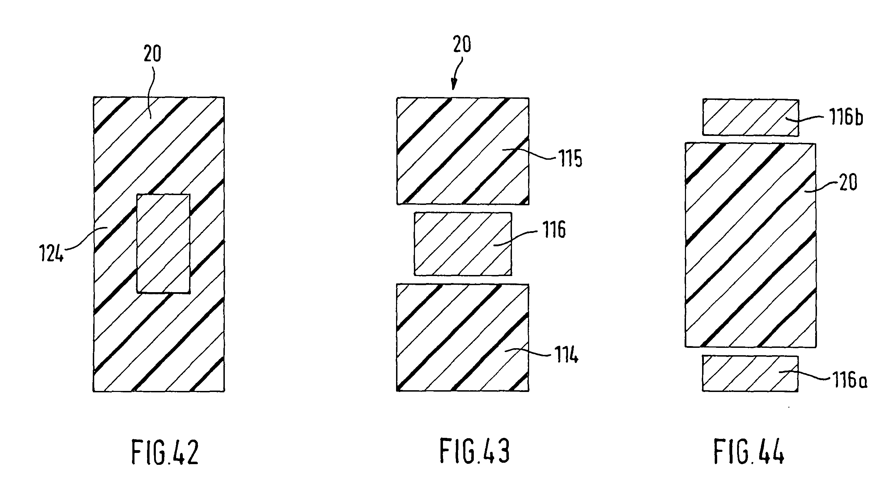

Figur 42 zeigt ein Ausführungsbeispiel, bei dem in das elastische Zwischenelement 20 eine "Fülleinlage" integriert ist. Die Fülleinlage kann einvulkanisiert, eingespritzt oder eingelegt sein. Bei der Fülleinlage 124, die als Anschlagelement fungiert, handelt es sich ganz allgemein um ein Teil, das aus einem Material hergestellt ist, das eine höhere Festigkeit aufweist als das Material, aus dem das eigentliche elastische Zwischenelement 20 besteht. Die Fülleinlage kann z.B. durch eine Stahl-, Kunststoff- oder durch eine Hartgummiplatte gebildet sein.

Figur 43 zeigt ein Ausführungsbeispiel, bei dem das elastische Zwischenelement 20 aus drei Bestandteilen besteht, nämlich einem linken bzw. rechten elastischen Teil 114, 115 und einem dazwischen angeordneten Anschlagelement 116, das einen geringeren Durchmesser als die elastischen Elemente 114 und 115 hat und erst dann zur Anlage kommt, wenn sich die elastischen Elemente 114, 115 entsprechend verformt haben.

Alternativ dazu können wie in Figur 44 dargestellt, auch zwei Anschlagelemente 116a, 116b vorgesehen sein, wobei das eigentliche elastische Zwischenelement 20 zwischen den beiden Anschlagelementen 116a, 116b angeordnet ist.

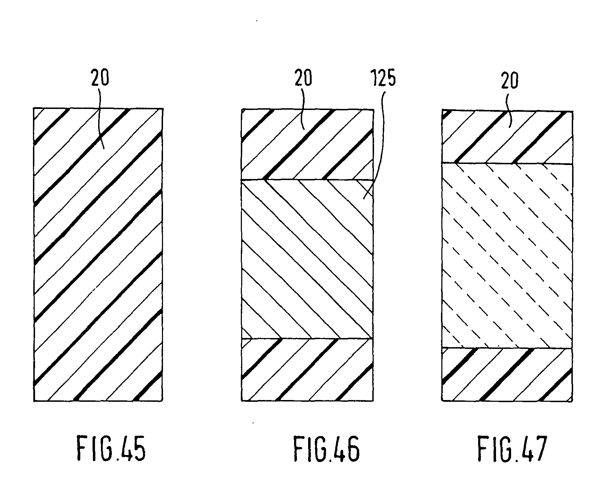

Beim Ausführungsbeispiel der Figur 45 besteht das elastische Zwischenelement 20 ausschließlich aus einem Elastomer.

Demgegenüber weist das elastische Zwischenelement der Figur 46 in seinem Mittelbereich eine Verstärkung bzw. eine Armierung 125 auf.

Beim Ausführungsbeispiel der Figur 47 ist im Mittelbereich des elastischen Zwischenelements 20 ein Bereich vorgesehen, der mit Füllstoffen verstärkt ist. Bei den Füllstoffen kann es sich beispielsweise um Keramikpartikel oder sonstige Feststoffpartikel handeln, die dem Mittelbereich eine höhere Festigkeit verleihen als den Randbereichen.

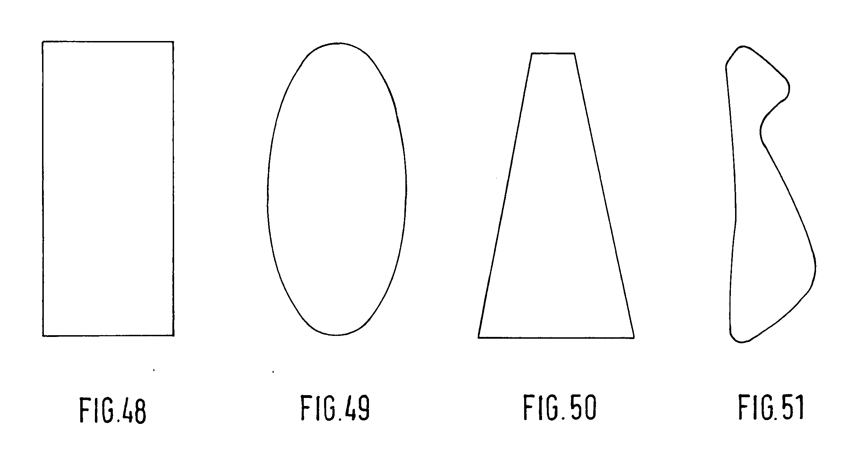

Die elastischen Zwischenelemente müssen nicht unbedingt zylindrisch bzw. tonnenförmig oder ellipsoidförmig sein, wie dies bei einigen der bisher erläuterten Ausführungsbeispiele der Fall war. Im Unterschied zu einer wie in Figur 48 dargestellten zylindrischen oder einer wie in Figur 49 dargestellten ellipsoidförmigen Form können die elastischen Zwischenelemente auch entsprechend Figur 50 die Form eines Kegelstumpfs haben. Schließlich kann es sich bei den elastischen Zwischenelementen auch um "Freiformkörper" handeln, was in Figur 51 angedeutet ist.

Ausdrücklich sei darauf hingewiesen, dass die elastischen Zwischenelement nicht notwendigerweise rotationssymmetrisch sein müssen. Sie können z.B. auch quaderförmig, spatförmig, prismenförmig, keilförmig oder andersartig gestaltet sein und z.B. aus mehreren derartigen "Formen" zusammengesetzt sein.

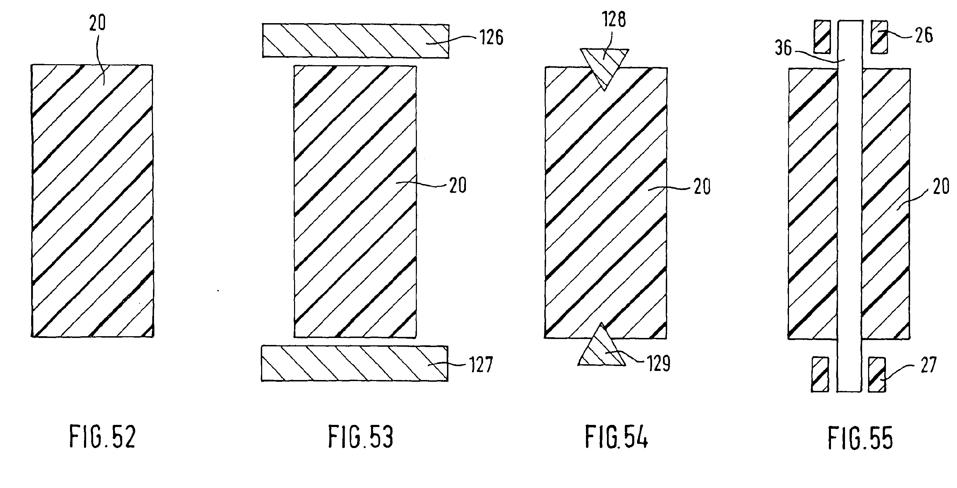

Beim Ausführungsbeispiel der Figur 1 - 4 sind die elastischen Zwischenelemente 20 - 25 durch die Haltelemente 26, 27 und die Stifte 36 - 41 (vgl. Figur 3) relativ zueinander positioniert und lagefixiert. Hierauf kann jedoch auch verzichtet werden. Das heißt, es können auch, wie in Figur 52 angedeutet, elastische Zwischenelemente 20 ohne jegliche Lagerung bzw. Lagefixierung verwendet werden. Die elastischen Zwischenelemente 20 können also ohne jegliche Lagefixierung zwischen die Arme des Gelenksterns und die Formschlusselemente der Gelenkglocke eingelegt sein.

Alternativ dazu können die elastischen Zwischenelemente 20 in Axialrichtung durch axiale Begrenzungselemente 126, 127 fixiert sein. In diesem Fall können sich die elastischen Zwischenelemente 20 innerhalb des Bereichs zwischen den axialen Begrenzungselementen 126, 127 im wesentlichen frei bewegen, verdrehen etc.

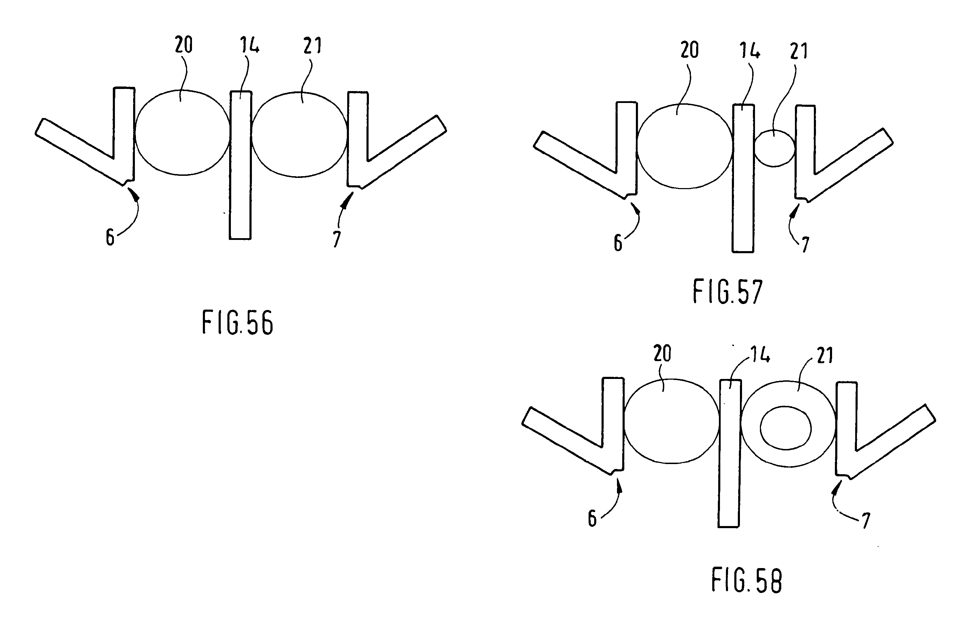

Bei dem in Figur 54 angedeuteten Ausführungsbeispiel sind die elastischen Zwischenelemente an ihren beiden Enden seitlich fixiert, z. B. durch Spitzen, Klemmelemente 128, 129 oder ähnliches. Figur 55 schließlich zeigt ein Ausführungsbeispiel, bei dem die elastischen Zwischenelemente 20 ähnlich wie beim Ausführungsbeispiel der Figuren 1- 3 durch zwei Halteelemente 26, 27 und einen Stift 36 gelagert sind.

Die Figuren 56 - 58 zeigen verschiedene Ausführungsbeispiele elastischer Zwischenelemente 20, 21. Ähnlich wie beim Ausführungsbeispiel der Figuren 1-4 sind in Figur 56 die beiden elastischen Zwischenelemente 20, 21 symmetrisch ausgeführt. Die "Drehcharakteristik" des Gelenkwellengelenks ist also bei "Zugbetrieb" und "Schubbetrieb" gleich.

Demgegenüber sind beim Ausführungsbeispiel der Figur 57 die elastischen Zwischenelemente 20, 21 unterschiedlich dimensioniert. Auf diese Weise kann das Gelenkwellengelenk beispielsweise für Zugbetrieb, bei dem das Drehmoment über das elastische Zwischenelement 20 übertragen wird, weicher gestaltet werden als für Schubbetrieb, bei dem das Drehmoment über das elastische Zwischenelement 21 übertragen wird. Während beim Ausführungsbeispiel der Figur 58 der Steifigkeitsunterschied zwischen den elastischen Zwischenelementen 20, 21 einfach dadurch erreicht wird, dass das elastische Zwischenelement 20 einen größeren Querschnitt aufweist als das elastische Zwischenelement 21, wird beim Ausführungsbeispiel der Figur 58 der "Steifigkeitsunterschied" dadurch erreicht, dass das elastische Zwischenelement 21 einen oder mehrere "innere Hohlräume" oder Ausnehmungen aufweist und somit weicher ist als das elastische Zwischenelement 20.

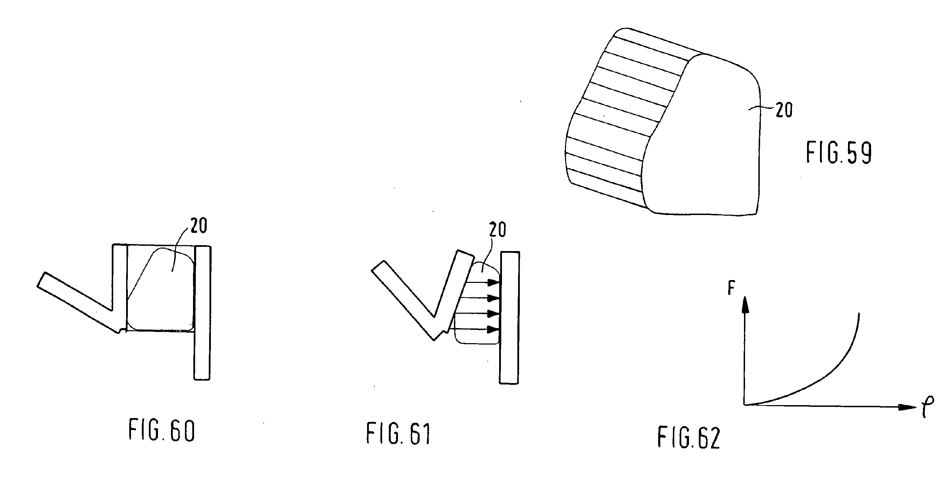

Die Figuren 59 - 62 beschreiben ein Ausführungsbeispiel, bei dem die elastischen Zwischenelemente die Form einer Rampe haben. Wie aus den Figuren 60 und 61 ersichtlich ist, kommt es bei der Übertragung relativ geringer Drehmomente primär nur zu einer Verformung des "unteren" Bereichs des elastischen Zwischenelements 20. Bei der Übertragung größerer Drehmomente werden die elastischen Zwischenelemente 20 wie in Figur 61 dargestellt zunehmend auch im mittleren und im oberen Bereich verformt. Hierdurch ergibt sich ein progressiver Kennlinienverlauf. Das heißt, die Kraft bzw. das vom Gelenkwellengelenk übertragene Drehmoment steigt "progressiv" mit dem Relatiwerdrehungswinkel des Gelenksterns gegenüber der Gelenkglocke an.

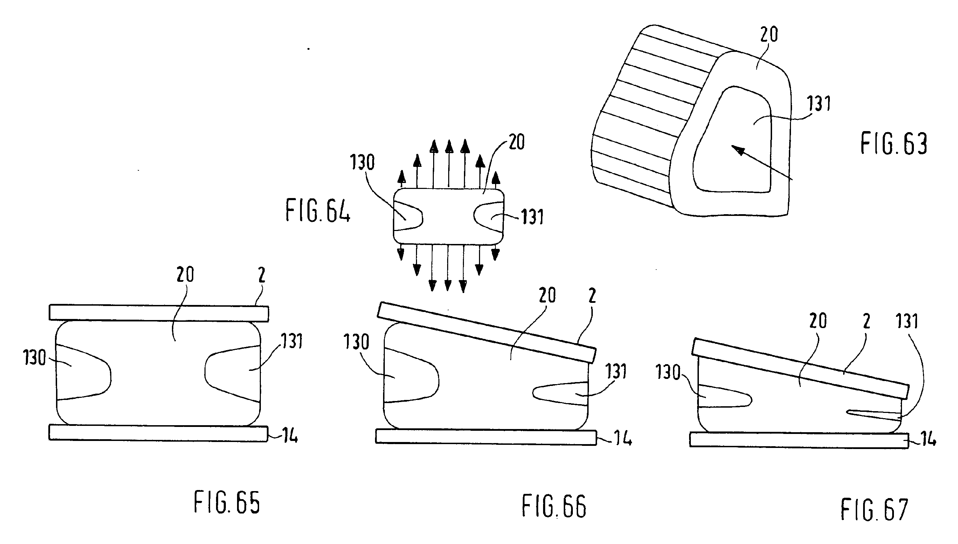

Die Figuren 63- 67 zeigen eine Variante des in den Figuren 59 - 62 dargestellten elastischen Zwischenelements 20. Bei dem hier gezeigten Ausführungsbeispiel weist das rampenförmige elastische Zwischenelement 20 seitliche Aussparungen 130 bzw. 131 auf. Durch die Aussparungen wird die Kippelastizität des Gelenkwellengelenks, d. h. die Kippelastizität des Gelenkwellensterns in Bezug auf die Gelenkwellenglocke erhöht.

Figur 65 zeigt einen Zustand, bei dem kein Drehmoment über das Gelenkwellengelenk übertragen wird und der Gelenkstern und die Gelenkglocke koaxial zueinander ausgerichtet sind.

Figur 66 zeigt einen Zustand, bei dem zwar ebenfalls kein Drehmoment übertragen wird, die Gelenkglocke 2 jedoch in bezug auf den Arm 14 des Gelenkstern, d. h. in bezug auf den Gelenkstern verschwenkt ist.

Im Zustand der Figur 67 ist die Gelenkglocke 2 gegenüber dem Gelenkstern verschwenkt und zusätzlich wird ein Drehmoment übertragen, was zu einer Deformierung des elastischen Zwischenelements 20 in Umfangsrichtung führt.

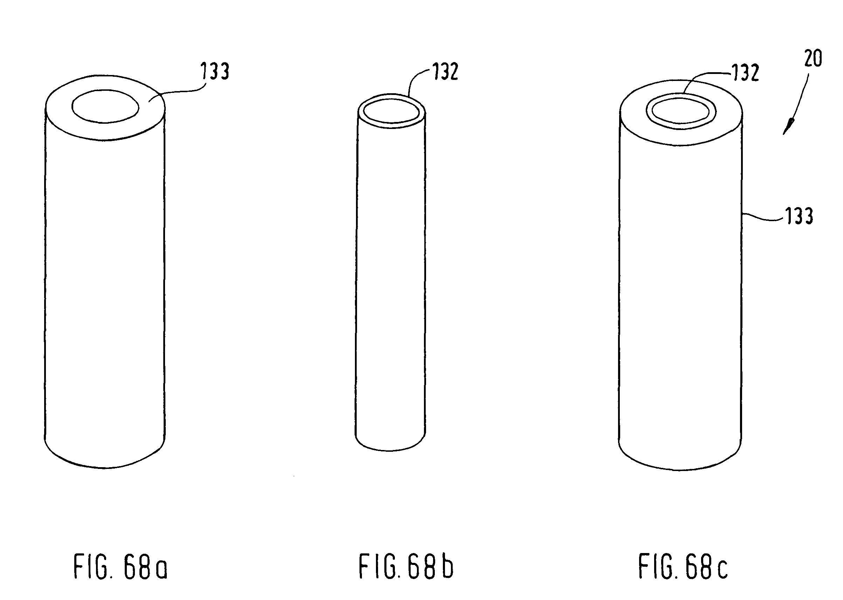

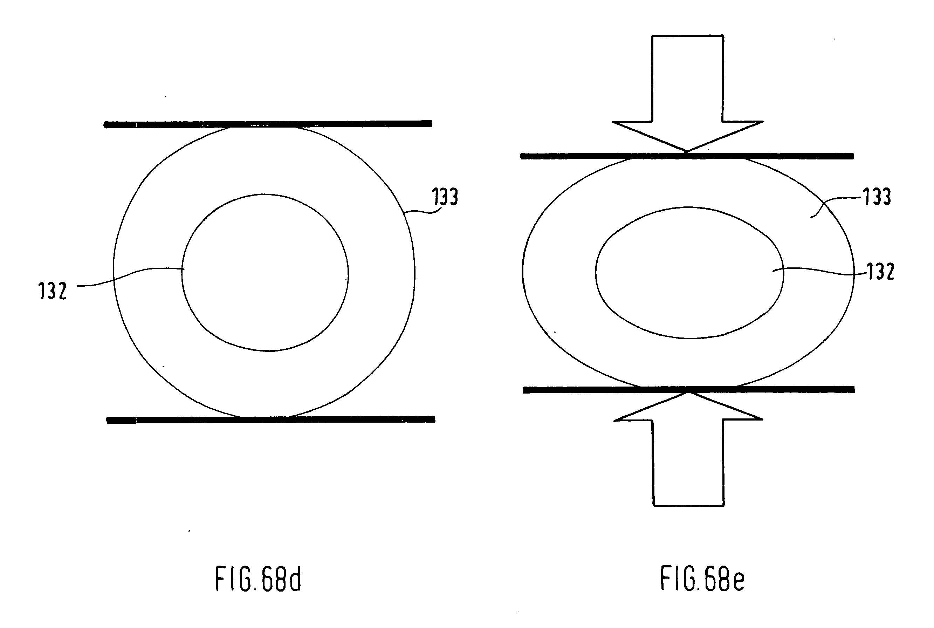

Figur 68 zeigt ein Ausführungsbeispiel eines elastischen Zwischenelements 20, das aus zwei zylindrischen Einzelkomponenten besteht, nämlich aus einer Federhülse 132 und einem kreiszylindrischen Elastomer 133, das auf die Federhülse aufgeschoben ist. Die Federhülse 132, die am besten in Figur 68b dargestellt ist, kann beispielsweise aus Federstahl hergestellt sein. Das kreiszylindrische Elastomerteil 131, das am besten in Figur 68a dargestellt ist, kann trennbar oder untrennbar mit der Federhülse verbunden sein. Das kreiszylindrische Elastomerteil 133 kann beispielsweise auf die Federhülse 132 aufvulkanisiert sein. Bei einem derartigen "zweiteiligen" Zwischenelement 20 wird das Elastomerteil 133 in seiner Federwirkung durch die Federhülse 132 unterstützt. Figur 68d zeigt das in Figur 68c dargestellte elastische Zwischenelement im unverformten Zustand, Figur 68e im verformten Zustand.

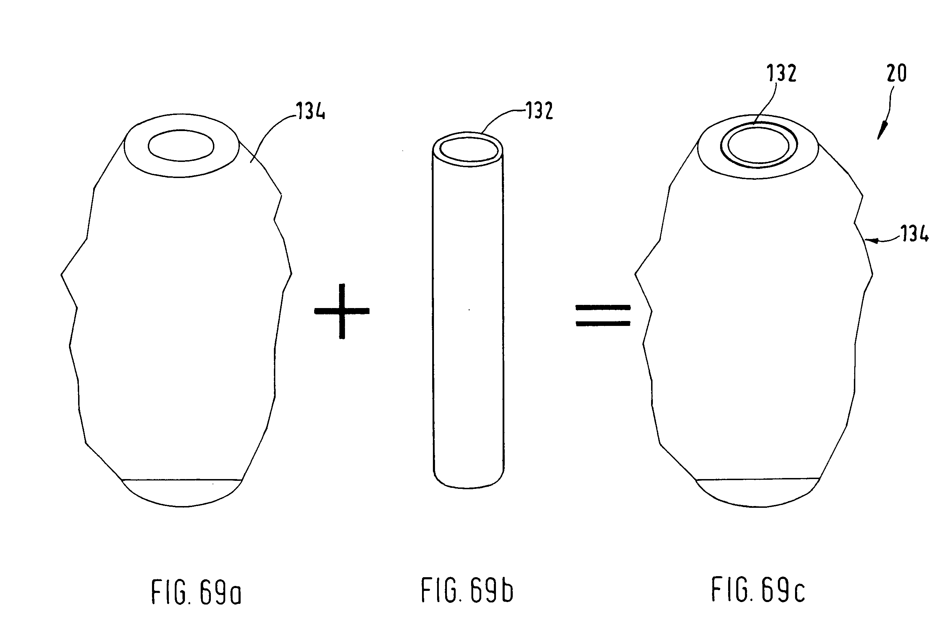

Figur 69 zeigt ein weiteres Ausführungsbeispiel eines "zweiteiligen" Zwischenelements 20. Das Zwischenelement 20 weist ein inneres Teil auf, das durch eine kreiszylindrische Federhülse (132) gebildet ist, die z. B. aus Federstahl besteht, und ein Außenteil 134, das eine Freiformaußenkontur aufweist, und das aus einem Elastomer besteht.

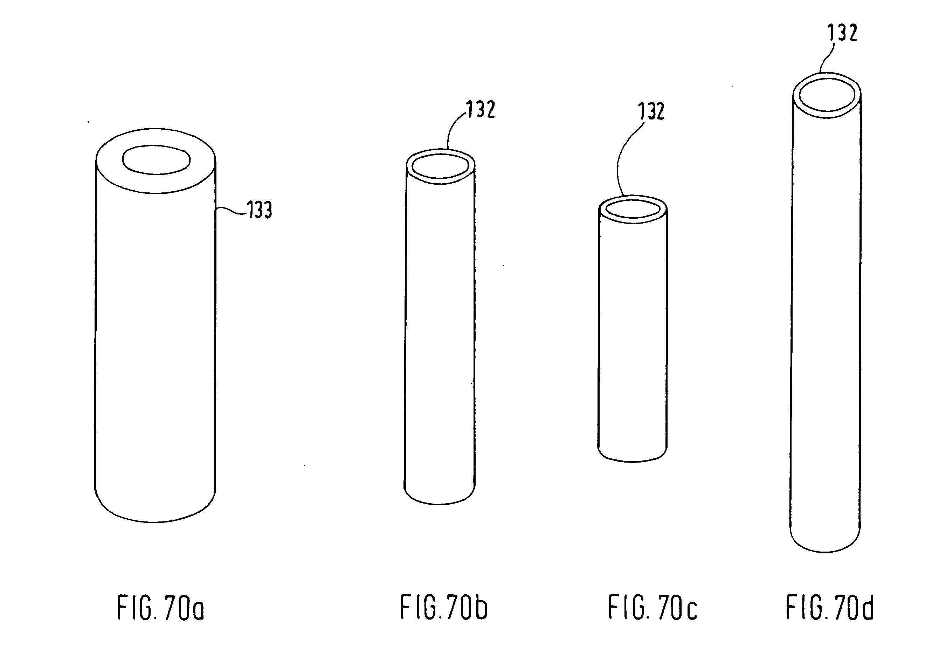

Bei allen "zweiteiligen" Zwischenelementen 20 kann die Federhülse in ihrer axialen Richtung gesehen die gleiche Länge aufweisen, wie das aus einem Elastomer bestehende Außenteil 133. Dies ist in Figur 70b dargestellt. Alternativ dazu kann die Federhülse 132 auch kürzer als das aus einem Elastomer hergestellte Außenteil 133 sein, was in Figur 70c dargestellt ist. Schließlich kann die Federhülse 132 auch länger sein als das aus einem Elastomer hergestellte zylindrische Außenteil 133, was in Figur 70d angedeutet ist.

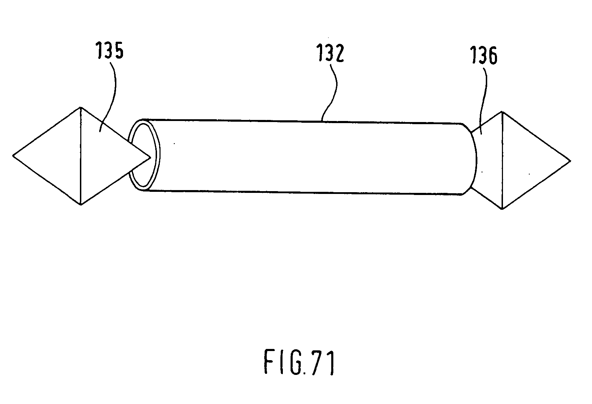

Wie in Figur 71 dargestellt ist, kann bei einem elastischen Zwischenelement die Federhülse 132 auch zur Fixierung bzw. Einspannung des elastischen Zwischenelements verwendet werden. Bei dem in der Figur 71 gezeigten Ausführungsbeispiel ist die Federhülse 132 zwischen zwei Lagerspitzen 135, 136 eingespannt.

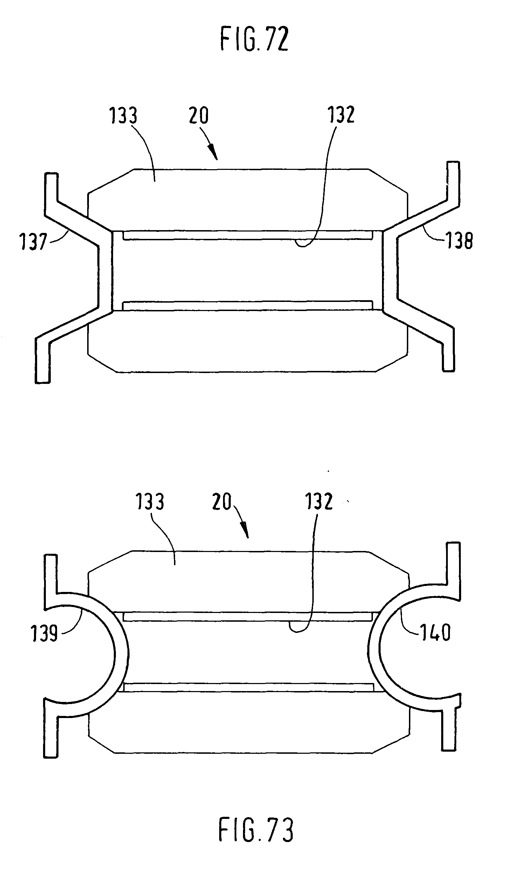

Figur 72 zeigt ein Ausführungsbeispiel eines elastischen Zwischenelements, das zwischen zwei im Querschnitt trapezartige Lagerelemente 137, 138 eingespannt ist.

Figur 73 zeigt eine Variante, bei dem das elastische Zwischenelement 20 zwischen zwei im Querschnitt halbkreisförmige Lagerelemente 139, 140 eingespannt ist.

## Patentansprüche

1. Gelenkwellenanordnung mit einem Gelenkwellengelenk (1), insbesondere einem Tripodegelenk, das zur Übertragung eines Drehmoments um eine Längsachse (11) vorgesehen ist, mit
einer Gelenkglocke (2), die im Bereich ihrer Innenseite mehrere Formschlusselemente (5 - 7) aufweist, die in einer Umfangsrichtung der Gelenkglocke (2) voneinander beabstandet sind,
einem in die Gelenkglocke (2) eingesetzten Gelenkstern (3), der mehrere von einem Zentralstück (10) nach außen abstehende Arme (14 - 16) aufweist, wobei jeder der Arme (14 - 16) jeweils zwischen zwei Formschlusselemente (5 - 7) der Gelenkglocke (2) eingreift,
**dadurch gekennzeichnet, dass**
zwischen jedem der Arme (14 -16) und den jeweils zugeordneten Formschlusselementen (5 - 7) in Drehmomentübertragungsrichtung elastische Zwischenelemente (20 - 25; 87, 88; 92) angeordnet sind.

2. Gelenkwellengelenk (1) nach Anspruch 1, wobei die Zwischenelemente (20 - 25) tonnenförmig sind. (Figur 3)

3. Gelenkwellengelenk (1) nach Anspruch 1 oder 2, wobei die Zwischenelemente (20 - 25) an ihrer Außenseite ballig sind. (Figur 10 - 15)

4. Gelenkwellengelenk (1) nach einem der Ansprüche 1 bis 3, wobei die Zwischenelemente (20 - 25) ellipsoidförmig sind. (Figur 10 - 15)

5. Gelenkwellengelenk (1) nach einem der Ansprüche 1 oder 3, wobei die Zwischenelemente (20 - 25) keilförmig, prismenförmig bzw. spatförmig sind. (Figur 48 - 51,63 - 67)

6. Gelenkwellengelenk (1) nach einem der Ansprüche 1 bis 5, wobei die Zwischenelemente (20 - 25) jeweils mindestens eine Ausnehmung aufweisen. (Figur 58, 63)

7. Gelenkwellengelenk (1) nach einem der Ansprüche 1 bis 6, wobei die Zwischenelemente (20, 22, 24), die einer Drehmomentübertragung des Gelenkwellengelenks in die eine Richtung zugeordnet sind, steifer ausgelegt sind als die übrigen Zwischenelemente (21, 23, 25), die einer Drehmomentübertragung in die entgegengesetzte Richtung zugeordnet sind. (Figur 34)

8. Gelenkwellengelenk (1) nach einem der Ansprüche 1 bis 7, wobei die Zwischenelemente (20, 22, 24), die einer Drehmomentübertragung des Gelenkwellengelenks in die eine Richtung zugeordnet sind, größer sind als die übrigen Zwischenelemente (21, 23, 25), die einer Drehmomentübertragung in die entgegengesetzte Richtung zugeordnet sind. (Figur 34)

9. Gelenkwellengelenk (1) nach einem der Ansprüche 1 bis 8, wobei die Zwischenelemente (20 - 25) in Hohlräume, die zwischen den Armen (14 - 16) des Gelenksterns (3) und den Formschlusselementen (5 - 7) der Gelenkglocke (2) vorgesehen sind, frei beweglich eingelegt sind. (Figur 52)

10. Gelenkwellengelenk (1) nach einem der Ansprüche 1 bis 8, wobei die Zwischenelemente (20 - 25) in Hohlräumen, die zwischen den Armen (14 - 16) des Gelenksterns (3) und den Formschlusselementen (5 - 7) der Gelenkglocke (2) vorgesehen sind, angeordnet sind und in Richtung der Längsachse (11) des Gelenkwelfengelenks (1) gegen Verrutschen gesichert sind. (Figur 53 - 55)

11. Gelenkwellengelenk (1) nach einem der Ansprüche 1 bis 10, wobei die Zwischenelemente (20 - 25) eine sie in ihrer Längsrichtung durchsetzende zylindrische Ausnehmung aufweist. (Figur 3, 4, 55)

12. Gelenkwellengelenk (1) nach einem der Ansprüche 1 bis 11, wobei die Zwischenelemente (20 -25) über mindestens ein Halteelement (26, 27) miteinander verbunden sind. (Figur 1 -4, 7, 31, 32)

13. Gelenkwellengelenk (1) nach Anspruch 12, wobei das mindestens eine Halteelement (26, 27) die Form eines Ringes (28) hat, von dem radial nach außen Haltearme (28 - 34) abstehen. (Figur 1 - 4)

14. Gelenkwellengelenk (1) nach einem der Ansprüche 12 oder 13, wobei an beiden Stirnseiten der elastischen Zwischenelemente (20 - 25) ein solches Halteelement (26, 27) angeordnet ist. (Figur 1 - 4)

15. Gelenkwellengelenk (1) nach einem der Ansprüche 12 bis 14, wobei einander zugeordnete Haltearme (29 - 34) der Halteelemente (26, 27) über stiftartige Elemente (36 - 41) miteinander verbunden sind, wobei die elastischen Zwischenelemente (25) auf die stiftartigen Elemente (36 - 41) aufgeschoben sind. (Figur 1 - 4)

16. Gelenkwellengelenk (1) nach einem der Ansprüche 1, bis 3, wobei die elastischen Zwischenelemente (87, 88) rollenförmig sind und im wesentlichen senkrecht zu den Armen (14 - 16) an den Armen (14 - 16) des Gelenksterns angeordnet sind. (Figuren 17, 18)

17. Gelenkwellenanordnung nach Anspruch 1 oder 3, wobei die elastischen Zwischenelemente durch eine auf die Arme (14-16) des Gelenksterns (3) aufgebrachte Elastomerschicht gebildet sind, wobei der Gelenkstern (3) mit der auf seine Arme (14-16) aufgebrachten Elastomerschicht (91) in die Gelenkglocke (2) gepresst ist. (Figuren 19, 21)

18. Gelenkwellenanordnung nach Anspruch 17, wobei die elastischen Zwischenelemente (92) im Bereich zwischen den Armen (14-16) des Gelenksterns (3) und den Formschlusselementen (5 - 7) der Gelenkglocke (2) Bereiche (93 - 96) mit geringerer Materialdichte aufweist. (Figur 19, 21)

19. Gelenkwellenanordnung nach einem der Ansprüche 1 bis 18, wobei der Gelenkstern (3) drei Arme (14 - 16) aufweist, die in Umfangsrichtung 120° voneinander beabstandet sind.

20. Gelenkwellenanordnung nach einem der Ansprüche 1 bis 19, wobei die Arme (14 - 16) des Gelenksterns (3) radial von einem Zentralstück des Gelenksterns nach außen abstehen. (Figur 1-4)

21. Gelenkwellenanordnung nach einem der Ansprüche 1 bis 19, wobei die Arme (14 - 16) des Gelenksterns (3) schräg von einem Zentralstück des Gelenksterns nach außen abstehen. (Figur 34)

22. Gelenkwellenanordnung nach einem Ansprüche 1 bis 21, wobei der Gelenkstern (3) ein Zentralstück (10) mit einer sich in Richtung der Längsachse (11) erstreckenden zahnartigen Innenprofilierung (13) aufweist.

23. Gelenkwellenanordnung nach einem der Ansprüche 1 bis 22, wobei die Arme (14 - 16) des Gelenksterns (3) an ihren drehmomentübertragenden Außenseiten im Bereich zwischen dem Zentralstück (10) und ihrem jeweiligen freien Ende konkav gekrümmt sind, entsprechend der Außenkontur der elastischen Zwischenelemente (20 - 25), und die elastischen Zwischenelemente (20) an den konkaven Außenseiten der Arme (14 - 16) des Gelenksterns (3) anliegen.

24. Gelenkwellenanordnung nach einem der Ansprüche 1 bis 23, wobei an freien Enden der Arme (14 - 16) des Gelenksterns (3) plattenartige Elemente (71 - 73) vorgesehen sind, die an einer Innenseite der Gelenkglocke (2) anliegen. (Figuren 11, 12)

25. Gelenkwellenanordnung nach Anspruch 24, wobei die plattenartigen Elemente (71 - 73) an ihrer der Innenseite der Gelenkglocke (2) zugewandten Außenseite ballig bzw. zu den Rändern der plattenartigen Elemente (71 - 73) hin abfallend abgeschrägt sind.

26. Gelenkwellenanordnung nach einem der Ansprüche 1 bis 25, wobei in einer Stirnansicht die Wand der Gelenkglocke (2) die Form eines Sterns hat, wobei die Formschlusselemente (5 - 7) durch Einbuchtungen (55 - 57) bzw. durch Ausbuchtungen (52 - 54) gebildet sind, in welche die Arme (14 - 16) des Gelenksterns (3) eingesetzt sind.

27. Gelenkwellenanordnung nach einem der Ansprüche 1 bis 26, wobei die Wand der Gelenkglocke (2) über den gesamten Umfang der Gelenkglocke (2) eine konstante Wandstärke hat.

28. Gelenkwellenanordnung nach einem der Ansprüche 1 bis 27, wobei die Gelenkglocke (2) ein Schmiedeteil ist.

29. Gelenkwellenanordnung nach einem der Ansprüche 1 bis 28, wobei die Gelenkglocke (2) durch ein Ende einer Gelenkwelle (51) gebildet ist.

30. Gelenkwellenanordnung nach einem der Ansprüche 1 bis 29, wobei die Gelenkglocke (2) durch ein umgeformtes Ende einer Gelenkwelle (51) gebildet und somit integraler Bestandteil der Gelenkwelle (51) ist.

31. Gelenkwellenanordnung nach einem der Ansprüche 1 bis 29, wobei die Gelenkglocke (2) an ein freies Ende einer Gelenkwelle (61) angeschweißt ist.

32. Gelenkwellenanordnung nach einem der Ansprüche 1 bis 26, wobei die Gelenkglocke (2) durch ein Strangpressprofil gebildet ist.

33. Gelenkwellenanordnung nach einem der Ansprüche 1 bis 26 oder 32, wobei die Gelenkglocke (2) ein kreiszylindrisches Rohr (4) ist, an dessen Innenseite die Formschlusselemente (5 - 7) vorgesehen sind.

34. Gelenkwellenanordnung nach Anspruch 33, wobei jedes der Formschlusselemente (5 - 7) jeweils durch zwei zur Rohrmitte hin pfeilartig zusammenlaufende plattenartige Elemente (8, 9) gebildet ist.

35. Gelenkwellenanordnung nach Anspruch 34, wobei plattenartigen Elemente (8, 9) an ihrem der Rohrmitte zugewandten Ende miteinander verbunden sind.

36. Gelenkwellenanordnung nach einem der Ansprüche 1 bis 35, wobei die der Gelenkglockenmitte zugewandten Enden der Formschlusselemente (5 -7) den Gelenkstern (3) in der Gelenkglocke (2) zentrieren.

37. Gelenkwellenanordnung nach einem der Ansprüche 1 bis 36, wobei die Gelenkglocke (2) aus einem Glockeninnenteil (89) und einem Glockenaußenteil (90) und eine zwischen dem Glockeninnenteil (89) und dem Glockenaußenteil (90) eingebrachte elastische Schicht (91) gebildet ist. (Figur 17, 18)

38. Gelenkwellenanordnung nach einem der Ansprüche 1 bis 37, wobei ein Zentrierelement (44) vorgesehen ist, das zwischen dem Gelenkstern (3) und der Gelenkglocke (2) angeordnet ist und das den Gelenkstern (3) in der Gelenkglocke (2) zentriert.

39. Gelenkwellenanordnung nach Anspruch 38, wobei das Zentrierelement (44) einen Ringabschnitt aufweist, der auf einen zylindrischen Abschnitt (42) des Gelenksterns (3) aufgeschoben ist.

40. Gelenkwellenanordnung nach einem der Ansprüche 38 oder 39, wobei das Zentrierelement (44) sich in Richtung der Längsachse (11) erstreckende Lappen (46 - 48) aufweist, die auf einer Außenseite des Zentralstücks (10) des Gelenksterns (3) aufliegen und die an einer Innenseite der Gelenkglocke (2) anliegen.

41. Gelenkwellenanordnung nach Anspruch 40, wobei die Lappen (46 - 48) an den Formschlusselementen (5 - 7) der Gelenkglocke (2) anliegen.

42. Gelenkwellenanordnung nach Anspruch 40, wobei an den freien Enden der Lappen (46 - 48) erhabene bzw. ballige bzw. konvexe Zentrierflächen (5a, 7a) vorgesehen sind.

43. Gelenkwellenanordnung nach Anspruch 42, wobei die Zentrierflächen (5a, 7a) die Form von Kugelkalotten haben.

44. Gelenkwellenanordnung nach Anspruch 42 oder 43, wobei an der Innenseite der Gelenkglocke muldenförmige Vertiefungen vorgesehen sind, in die die erhabenen bzw. balligen bzw. konvexen Zentrierflächen (5a, 7a) eingreifen, derart, dass das Zentrierelement (44) zusammen mit dem Gelenkstern (3) kugelgelenkartig in Bezug auf die Gelenkglocke (2) verschwenkbar ist.
